(19) **Europäisches Patentamt**
**European Patent Office**
**Office européen des brevets**

(11) **EP 3 203 436 B1**

(12) **EUROPEAN PATENT SPECIFICATION**

(45) Date of publication and mention
of the grant of the patent:
**18.05.2022 Bulletin 2022/20**

(21) Application number: **17000090.5**

(22) Date of filing: **19.01.2017**

(51) International Patent Classification (IPC):
**G06Q 50/26** (2012.01) **G06F 21/31** (2013.01)
**G06Q 20/40** (2012.01)

(52) Cooperative Patent Classification (CPC):
**G06Q 50/26; G06F 21/31; G06F 21/316;**
**G06Q 20/4016**

(54) **MONITORING USER AUTHENTICITY IN DISTRIBUTED SYSTEM**

ÜBERWACHUNG DER BENUTZERAUTHENTIZITÄT IN EINEM VERTEILTEN SYSTEM

CONTRÔLE DE L'AUTHENTICITÉ D'UN UTILISATEUR DANS UN SYSTÈME DISTRIBUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2016 FR 1650875**
**04.02.2016 US 201615015871**

(43) Date of publication of application:
**09.08.2017 Bulletin 2017/32**

(73) Proprietor: **Amadeus S.A.S.**
**06410 Biot (FR)**

(72) Inventors:
• **Amar, Virginie**
**06410 Biot (FR)**
• **Barlet, Jeremie**
**06200 Nice (FR)**
• **Peicle, Romain**
**06600 Antibes (FR)**
• **Thonnard, Olivier**
**06130 Grasse (FR)**
• **Zouaoui, Jihane**
**06330 Roquefort les Pins (FR)**

(74) Representative: **Samson & Partner Patentanwälte
mbB
Widenmayerstraße 6
80538 München (DE)**

(56) References cited:
**US-A1- 2006 282 660**

• **Leslie Milton ET AL: "N-Gram-Based User
Behavioral Model for Continuous User
Authentication", SECURWARE 2014, Eighth
International Conference on Emerging Security
Information, Systems and Technologies, 20
November 2014 (2014-11-20), pages 43-49,
XP055314965, ISBN: 978-1-61208-376-6
Retrieved from the Internet:
URL:http://www.cs.umd.edu/~atif/pubs/secur
ware2014.pdf [retrieved on 2016-10-28]**
• **JEONGSEOK SEO ET AL: "Masquerade detection
based on SVM and sequence-based user
commands profile", PROCEEDINGS OF THE
ASIACCS, ACM, 2 PENN PLAZA, SUITE 701 NEW
YORK NY 10121-0701 USA, 20 March 2007
(2007-03-20), pages 398-400, XP058249242, DOI:
10.1145/1229285.1229340 ISBN:
978-1-59593-574-8**
• **SALJOOGHINEJAD HAMED ET AL: "Layered
Security Architecture for Masquerade Attack
Detection", 11 July 2012 (2012-07-11), NETWORK
AND PARALLEL COMPUTING; [LECTURE
NOTES IN COMPUTER SCIENCE; LECT.NOTES
COMPUTER], SPRINGER INTERNATIONAL
PUBLISHING, CHAM, PAGE(S) 255 - 262,
XP047346858, ISSN: 0302-9743 ISBN:
978-3-642-36762-5 * abstract; figure 1; table 4 * *
"2. Background and Related Work" "3. Our
layered approach" "4. Data collection &
calculation of features" "5. Learning and
classification" ***

- B. Padhmavathi ET AL: "A NOVEL CLIENT SIDE INTRUSION DETECTION AND RESPONSE FRAMEWORK", , 1 September 2014 (2014-09-01), XP055320955, Retrieved from the Internet: URL:http://www.ejerm.com/vol1_spl_sep2014/img/A_Novel_Client_Side_Intrusion_Detection_and_Response_Framework.pdf [retrieved on 2016-11-18]
- BRYANT E ET AL: "Poly<2> paradigm: a secure network service architecture", COMPUTER SECURITY APPLICATIONS CONFERENCE, 2003. PROCEEDINGS. 19TH ANN UAL 8-12 DEC. 2003, PISCATAWAY, NJ, USA,IEEE, 8 December 2003 (2003-12-08), pages 342-351, XP010675109, DOI: 10.1109/CSAC.2003.1254339 ISBN: 978-0-7695-2041-4
- Peter J Best ET AL: "Continuous Fraud Detection in Enterprise Systems through Audit Trail Analysis", The Journal of Digital Forensics, Security and Law : JDFSL, 1 January 2009 (2009-01-01), pages 39-60, XP055320956, Farmville Retrieved from the Internet: URL:http://www98.griffith.edu.au/dspace/bitstream/handle/10072/47590/80839_1.pdf?sequence=1 [retrieved on 2016-11-18]
- YAZJI SAUSAN ET AL: "Implicit User Re-authentication for Mobile Devices", 7 July 2009 (2009-07-07), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 325 - 339, XP047386481, ISBN: 978-3-642-17318-9
- FRIDMAN ALEX ET AL: "Decision Fusion for Multimodal Active Authentication", IT PROFESSIONAL, IEEE SERVICE CENTER, LOS ALAMITOS, CA, US, vol. 15, no. 4, 1 July 2013 (2013-07-01), pages 29-33, XP011525008, ISSN: 1520-9202, DOI: 10.1109/MITP.2013.53 [retrieved on 2013-08-23]
- SHI ELAINE ET AL: "Implicit Authentication through Learning User Behavior", 25 October 2010 (2010-10-25), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 99 - 113, XP047428859, ISBN: 978-3-642-17318-9
- Anonymous: "Anomaly detection", Wikipedia, 9 January 2017 (2017-01-09), pages 1-5, XP055780065, Retrieved from the Internet: URL:https://en.wikipedia.org/w/index.php?title=Anomaly_detection&oldid=759127417 [retrieved on 2021-02-26]
- Victoria Hodge ET AL: "A Survey of Outlier Detection Methodologies", Artificial Intelligence Review, vol. 22, no. 2, 1 October 2004 (2004-10-01), pages 85-126, XP055176642, ISSN: 0269-2821, DOI: 10.1023/B:AIRE.0000045502.10941.a9

**Description**

**FIELD OF THE INVENTION**

The invention relates to the field of monitoring user authenticity during user activities on at least one application server.

**BACKGROUND**

WO 2006 118 968 A2 describes a method for service providers to identify possible fraudulent transactions, based on user and device historical data analysis with a predetermined ruleset. User data analysis comprises analyzing user behavior patterns, by comparing them with predefined rules. A scoring engine with a rule-based weighting model determines whether the behavior pattern is fraudulent or not.

US 2013/0104203 A1 describes a method of determining a level of authentication associated with a user, based also on a behavioral fingerprint.

In "A Survey of Outlier Detection Methodologies", Artificial Intelligence Review, vol. 22, no. 2, 1 October 2004 (2004-10-01), pages 85-126, XP055176642,ISSN: 0269-2821, Victoria Hodge et A1. disclose the use of Gaussian mixtures and the use of Markov chains in the detection of outliers, techniques that can be used to detect fraudulent behaviours.

**SUMMARY OF THE INVENTION**

The invention is defined by the independent claims.

**GENERAL DESCRIPTION, ALSO OF OPTIONAL EMBODIMENTS**

According to a first aspect, a method of monitoring user authenticity during user activities in user sessions on at least one application server is provided.

Monitoring user authenticity in user sessions refers to checking whether a user logged on the application server and using applications running thereon is really the user he or she pretends to be.

A user session is the set of all consecutive actions made by a given user after having been authenticated in the application using his credentials (i.e., by "logging in"), until the user closes his session by using the de-authentication functionality provided by the application.

The method being carried out in a distributed manner by means of a distributed server system. The distributed server system comprises the at least one application server and at least one user-model server. The at least one application server is the server on which the application(s) on which the user is performing activities on is executed. One application can be executed on each application server or a plurality of applications can be executed on a single application server or a combination thereof. The at least one user-model server is a server with processor(s) that are physically separated from the processor(s) of the application server(s). For example, also a logon-and-security server(s) is (are) provided for accessing the application server(s). The at least one application server and the at least one user-model server are connected to each other over a network, such as the internet.

Each of the at least two servers comprise at least one processor and at least one non-volatile memory comprising at least one computer program with executable instructions stored therein. The method is carried out by the processors executing the instructions. The one or more processors are, for example, processors of an application server and of other servers used to carry out the method. The instructions are typically given by executable computer-program code, the non-volatile memory is, for example, a read-only memory (ROM), an Electrically Erasable Programmable Read-Only Memory (EEPROM), or a flash memory.

The instructions cause the processor(s), when carried out by the processor to perform a user-modelling process in which an existing user model is adapted session-by-session to user activities. The term "process" with respect to the above mentioned "user-modelling process" and "user-verification process" refers to sub-methods of the method of monitoring user authenticity during user activities in user sessions comprising a plurality of tasks carried out by the processor(s) rather than to single tasks carried out by the processor(s).

The user model is not restricted only to certain behavior-characteristics of the user, such as the access-time to a booking application on the application server or the geographical origin of this access, e.g. from France or from China, but rather takes into account a plurality of such characteristics. Hence, for example, the user model takes also into account, which internet browser was used for the access in which operating system or client device, just to name some examples. The user model, in this way, reflects a plurality of behavior characteristics that can be analyzed and mapped to such a model by the method described herein.

The existing user model that is adapted can be based on, for example, a user model that was determined during a training phase with an exemplary length of three months or on a user model that was predefined by an administrator on the basis of user-behavior data.. The adaption of the existing user model is accomplished session-by-session. In this way, the adaption of the user model can either be accomplished in real time, i.e. during the user-session, or at the beginning or the end of a session.

In any case, the user model is (i) user centric, (ii) adaptive, and (iii) extensible to take new user-behavior into account, since user-behavior might also change from time to time.

The method of monitoring user authenticity during user activities in user sessions comprises transfer of user-activity data from the at least one application server to the at least one user-model server. In this way, the at least one user-model server serves as a central node for all user activity data from all the applications running on the at least one application server. The user model is adapted on this user-model server according to the transferred user activity data. The method of monitoring user authenticity during user activities in user sessions further comprises a transfer of adapted-user-model data from the at least one user-model server to the at least one application server. Adapted-user-model data means either a delta between the user-model currently stored on the application server and the user-model which has been adapted on the user model server, or means simply the adapted user-model itself.

As mentioned above, the user-modelling process is performed on an user-model server and the user model is adapted based on the user-activity data transferred from the at least one application server.

The user model is, for example, determined and adapted based on received user-specific application-log data, which contain complete traces of the user's activities. This can be done regularly when the user has completed a session, i.e. in a post-mortem fashion or by real-time streaming. The data is, for example, transmitted from the applications to the user model server or any other instance, where building and adapting the user model is performed. For polling the log data, for example, a daemon is running on the network node between the user-model server and the application server to poll log-data every 5 to 60 minutes or at the end of each user-session. The transmission of data to the user-model server is, for example accomplished over the simple network management protocol (SNMP) on network level and on application level by C++ interfaces.. The user activities can be reconstructed from the above mentioned log-data.

These reconstructed user activities are parsed through at least one data-mining algorithm to extract the features for the different adaptive feature-specific user-behavior models. Examples for such data-mining algorithms are hidden Markov-models, support vector machines or neural networks.

The user model comprises, for example, statistical distributions modelling login timestamps of a user, or, for example, Markov-chain models modelling sequences of actions of the user. They may also contain feature-vectors of a plurality of features extracted from the user activities in order to obtain a centroid of these feature vectors and a difference of a feature vector of current user activities to this centroid. These models are adapted, for example, by recalculating the models and including the new features extracted from a newly received user-session log-data. These calculations may require data storages of several terabytes as well as tremendous computation power, as these user-centric models are determined and adapted separately for each user using the application(s).

Furthermore the instructions cause the processor to perform a user-verification process. The user-verification process comprises comparing the user model with features extracted from user activity in the user session on the application server. Specific parts of the user-behavior models, hereinafter referred to as feature-specific user behavior models, for example, reflect the behavior of the user with respect to particular features. The specific parts of the user model are, for example, compared with specific features extracted from user behavior associated with these specific parts, and the deviations are aggregated to obtain a total deviation between the user model and the user behavior. To provide an example, a deviation between a current connection time and a part of the user model that is specific to the connection times is combined with a deviation between a current origin of a user activity and a part of the user model that is specific to the origin of user activities, i.e. a class of features related to origins of the user activity. Members of this class of features are, for example, the IP address of a user request or geographical location of the user.

Alternatively, current activities of the user, reflected by all extracted features, are taken as a whole and compared as a whole to the user model, for example, by comparing these activities with a sufficiently trained and adapted neuronal network model.

The user-verification process being performed on the at least one application server, wherein the user-verification process is performed using the adapted-user-model data transferred from the user-model server.

After having been adapted, for example, after a user session, the user model, after having been adapted on the user model server, is replicated on the at least one application server by transferring adapted-user-model data to the application server. This transfer may be achieved by copying the adapted version of the user model from the user-model server to the application server as a whole or by copying only a delta between the adapted user model and the non-adapted version of the user model. On the application server(s), for example, a journal is maintained in which current activities of the user are recorded. The current user activities stored in this journal can be compared to the user model copied to the application server to obtain the deviation between this most up-to-date user model and the current user data.

On the basis of the comparison of current user activity to the user model, or more precisely on the deviation obtained by this comparison, a total risk-score value is determined. The higher the deviation, the higher is the total risk-score value.

It is an indication for doubtful user authenticity when this total risk-score value exceeds a given threshold. This threshold is, for example, set by an administrator. The threshold might also be chosen in a user-specific manner, as there are users who tend to change their habits with respect to, for example, flight booking, more often and such that don't.

In response to exceeding the given threshold, a corrective action is triggered. This corrective action is one of (i) signing out the user, (ii) requesting a two-factor authentication from the user, (iii) locking the user, and (iv) initiating an alert function.

Signing out the user is, for example, logging out the user from the current session. Requesting a two-factor authentication from the user is, for example, requesting the user to answer a predefined security question, and signing out the user when the answer to the predefined security question is wrong. Locking the user is, for example, deleting a user profile and/or denying access of the user to the application server permanently. Initiating an alert function is, for example, issuing an alert to a human operator, so that he or she can appreciate the situation and take necessary actions.

The comparison is performed on the application server and also the corrective action is triggered by the application server. Hence, the evaluation of the user activities to verify the authenticity is carried out right on the server where these actions are performed and short-term interaction (such as triggering the corrective action) may be required, but nevertheless on the basis of the most up-to-date user model. The triggering of a corrective action is in this way not influenced by any network latencies, as the user-verification process triggering the same is located right on the application server on which the user activities are performed. Building and adapting user models is a long-term process and that does not necessarily require top up-to-date data about user activities, but however requires plenty computation power. The user-model process is therefore performed on at least one separate user-model server.

As one part of the method of monitoring user authenticity (the user modelling part) is carried out on the user-model server, on the basis of data transferred from the application server(s) to the user model server(s) and the other part of the method (the user-verification part) is carried out on the application server, but based on data transferred from the user-model server to the application server(s) (adapted-user-model data), the method is, so to say, carried out in a doubly-distributed manner. The first kind of distribution is the distribution of the method on different servers, the other part of the distribution is that the application server is a data source (user activities etc.) for the user-model server, but however at the same time data a sink for the user-model server (user model etc.) and vice versa.

In some embodiments, the corrective action is selected based on the total-risk-score value.

The type of corrective action triggered depends, for example, on the actual threshold that has been exceeded by the total risk-score value. To trigger corrective actions of three different types there are, for example, three different thresholds. If the total-risk-score value is higher than a first threshold, for example, a two-factor authentication is issued. If the total risk-score value is higher than a second threshold, the user is signed out.

If, however, the total risk-score value is higher than a third threshold, the user is locked.

In some embodiments, the user-activity data comprises at least one user-activity log file. The above mentioned log-data comprising information about the users' activities on the at least one application server is, for example, stored in such a log file. The log file is transmitted from the applications to the user model server. On the user model server, features used for adapting the user model are extracted from this log-file by the above mentioned learning engine performing the user session reconstruction.

In some embodiments, the features are obtainable from at least two different applications, running on at least two different application servers.

The user model is, for example, adapted on a user-model server on the basis of user activity associated with different applications running on different application servers. Hence, the executable instructions are, for example, programmed in a manner that interfaces to a plurality of different applications are provided.

The user model may have specific parts for different applications, as a certain behavior patterns, for example, the chosen payment method may vary for a user depending on the application. If, for example, a journey is booked via a train-company website, the user may choose to pay by direct debit collection, whereas the same user might prefer to pay via credit card, when booking a flight on the web-site of a flight-booking provider. The same modelling techniques (similarity measures, neuronal networks, Gaussian mixture, etc.) may be used for creating these application-specific parts of the user model for the same features. In this examples, the feature session duration, i.e. the time between a log-in of the user and a log-out, is, for example, mapped to a Gaussian-mixture model, with however different characteristics for different applications.

However, also different modelling techniques may be used for modelling the same features extracted from log-data of different applications. Hence, for application "X" the feature session duration (modelling technique of session durations for application "X") might be mapped to a Gaussian-mixture model, whereas for application "Y" the session duration might be mapped to a running average of session durations (modelling technique of session durations for application "Y").

In some embodiments, the corrective action is performed regardless of the risk-score value, in response to a certain feature pattern being detected.

In this way, regardless of the total risk-score value and the underlying statistics, some behavior patterns may cause a corrective action (requesting a two-factor authentication from the user, or locking the user). These behavior patterns might be defined by a risk-analyst. If somebody, for example, repeatedly submits requests to change his or her username and the password, this raises doubt about the identity of the user and therefore, for example, leads automatically to the request of a two-factor authentication from the user.

In some embodiments, the user model comprises a plurality of feature-specific user-behavior models.

A feature-specific user-behavior model is a model associated with a feature indicative of user behavior. Thereby, the adaptive feature-specific user-behavior models can be seen as sub-models of the user- model. One adaptive feature-specific user-behavior model is, for example, specific to the feature durations of sessions, for example, in an application, another adaptive feature-specific user-behavior model is, for example, specific for the feature sequence of actions, as a certain user might have the habit to forget the password of the application but, however, usually enters the right username. If, for example, this user suddenly types in a wrong user-name repeatedly, this behavior might be suspicious. Another feature-specific user-behavior model is, for example, specific to the client software and type of client machine used. When a user does not have the habit to use an application from an i-phone ® or any other apple ® - product, but this behavior is suddenly detected, this might point to a fraud, as someone might only pretend to be the owner of a certain user-profile.

The feature-specific behavior-model is chosen such that it is appropriate to reflect the features associated with it. A Markov-chain model is, for example, more suitable to model a sequence of actions than a Gaussian mixture model, whereas the latter is more suitable to model rather the distribution of durations of user sessions or log-in times of the user.

Furthermore, for example, origins of the requests submitted to an application on the server or the type of internet browser or client computer used, are, for example, modelled by pattern-frequency-based techniques, which identify sub-sequences in the users behavior related to client computers or origins of requests and count the number of infrequent sub-sequences in a long-timeframe sequence. The sequences of user actions in an application, for example, when boking a flight, can also be analyzed by similarity based techniques, that calculate a centroid of previously recorded feature vectors, obtained from past sequences of actions when, for example, booking a flight. This centroid can, for example, be used to obtain the difference between a feature-vector of current user activities to the centroid. Hence, for example, such a technique as the adaptive feature-specific user-behavior model related to the sequence of actions of a user when using a particular application.

These models are adapted, for example, by recalculating the models and taking into account new feature values, each time new user-activity data is transmitted to an adaptive feature-specific user-behavior model calculation module, starting with a model solution that corresponds to the last feature-specific user behavior model where the new feature values had not been taken into account.

Some features extracted from user activity in the user session namely the class of features related to origins of the user activity, the feature time stamps of the activities, durations of a user session in which the activities are performed and at least one of the class of features client information, the feature office information, and the feature organization information and their mapping to a feature-specific user behavior model are described in more detail below.

The origin of the user activity refers to the country or region from which the request to the application server to carry out the activity was issued. Information about the origin of the request can, for example, be extracted from a "whois record" of the IP address of the request, e.g. a HTTP-request. This "whois record" contains information about the internet service provider (ISPs). From the regional distribution of an ISP the origin of the request can be deduced. If information about which IP addresses are routed by a certain internet service providers over which routers, is available, the origin can be determined even more precisely than by analyzing the regional distribution of ISPs.

If the origin of the user request is, for example usually Germany, more specifically between Munich and Stuttgart, but however is also sometimes located in Sachsen or in Upper-Austria. This data is used to create an adaptive feature-specific user-behavior models associated with the origins of the requests. If the above described user logs onto the application server from Belarus, the behavior might cause a high total risk-score value as the deviation between the user model and current user activity is high at least with respect to this feature.

The origin of the user activity may also refer to the IP addresses of the user-requests, themselves. A feature-specific behavior model of these IP addresses can, for example, be determined by collecting all the IP addresses from which user-requests are received and assigning a specific probability to each IP address. A distance in IP space can be calculated between the IP address of the present request and all other IP addresses from which requests are usually issued, for example taking into account the proximity of two different addresses in IP space by comparing the subnets to which they belong. A weighted average of all IP-based distances can be calculated to reflect the average proximity of the present user IP address to all other addresses from which the user has sent requests, whereby above distances can be weighted according to the relative frequency of occurrence of every IP address.

Time-stamps of user activities are, for example time stamps associated with user requests when using an application. Such a user request at question is a request directed to an application running on the application server by the user. Examples for such a user-request are: a login-request, a request to connect to a certain application, a final-booking request etc.

Hence, it can be deduced from the adaptive feature-specific behavior model associated with those timestamps, for example, whether the user, for example, connects to certain applications on the application server rather in the early evening, late night, on weekends or during working days or the like.

A feature-specific behavior-model associated with the time stamps of the actions of the user comprises a Gaussian-mixture model of time stamps of the user activity.

A Gaussian mixture model is a probabilistic model that assumes all the data points - in this particular case the time stamps - are generated from a mixture of a finite number of Gaussian distributions with unknown parameters. Such a Gaussian-mixture model is mathematically given by the following formula:

$$P(x) = \sum_{i=1}^{N} a_i G_i(x, \mu_i, \sigma_i)$$

, wherein $a_i$ is a-priory probability that the $i$th Gaussian distribution $G_i(x, \mu_i, \sigma_i)$, $\mu_i$ is the expectation value of the $i$th Gaussian distribution and $\sigma_i$ is the standard-deviation of the $i_{th}$ Gaussian distribution and $P(x)$ is the probability of a certain timestamp x.

The expectation values $\mu_i$ and the standard-deviations $\sigma_i$ of the Gaussian distributions are adapted to time-stamps of the user activity, e.g. a user request, by the user session-by-session as described above and also the above described weights of the Gaussian distributions with these standard-deviations and expectation values. Thereby the feature-specific user behavior-model associated with time stamps of user activities is adapted to user behavior.

Furthermore, for example, also durations of a user session are a feature modelled by an adaptive feature-specific behavior model. This provides user authenticity information as a user performs, for example, a flight booking in a certain manner and therefore needs a certain time to perform the task of booking a flight. Naturally the time needed by the user to perform a banking transaction might be different to the time to perform the task in the flight booking application. Hence, there is, for example, a certain user-session duration with respect to a flight booking application and a user-session duration with respect to banking applications. These exemplary session durations are then reflected, for example, by two different adaptive feature-specific behavior models pertaining to different applications on the basis of which different feature-specific risk-score values associated with session durations are built, one specific, for example, specific for the booking-application, one specific for the banking application.

A feature-specific behavior-model characterizing the duration of user sessions maps the duration of user sessions to at least one of (i) a moving average, (ii) a median, (iii) a standard-deviation of the user-session duration, (iv) a quantile of the duration of user sessions.

A moving average is given by an average of for example, the last 1000 durations of user sessions.

A standard-deviation of a dataset is defined in statistics as the square root of a variance of a data-set or probability distribution, i.e. the averaged squared difference between (i) the expectation value of a random variable, in this case a session-duration, and (ii) the actual value of that variable.

A median is the number separating the higher half of a data sample or probability distribution from the lower half of the data sample or the probability distribution. If for example a set of user session durations is given by {1.0, 2.0, 5.0, 6.0, 8.0, 12.0, 16.0} minutes, the median is 6.0 min, as it is the central data point of the ordered set.

A quantile is a certain value user duration value dividing a probability distribution into a section to the left of this value and a section to the right of this value. If, for example, a probability distribution of session durations of the user is recorded, it can be deduced from this distribution that, 75% of the user session durations are below a certain value, e.g. 8 minutes.-. In this way if, for example, 80% of the last ten session durations were above this certain value this might be indicative of a fraudulent behavior.

At least one of (i) a moving average, (ii) a standard deviation, (iii) a median of durations of user sessions or a combination thereof form a simple adaptive feature-specific behavior-model, which is adapted by taking new session durations into account when calculating the a new moving average, standard-deviation or median.

The quantile is, for example, adapted by taking into account new values when calculating the probability distribution of the user session durations of, e.g. the last 1000 session durations.

The class of features client information, for example, pertains to the specific hardware and software used by the user when performing actions in the application(s) on the application server(s). This is, for example, the internet browser used (google-chrome ®, Microsoft internet explorer ®, etc.), or the type of computer used (tablet, PC, smartphone etc.) and the operating system (android ®, iOS ®) used.

Client information can also be provided by a so called user agent, which are particular records identifying the internet browser used of the user in detail.

Office information and organization information, for example, pertains to a static IP address used by a certain company, a hash value associated with user requests identifying the requests to belong to a certain company or organization, or the like. In this way the user can be identified, for example, as an employee of a certain organization/company etc. by analyzing the requests with respect to these identifiers.

The feature sequence of actions performed by the user and possible way of modelling this feature by a Markov-Chain is described in the following.

The sequence of actions is a timely ordered set of activities of the user performs when using the application server. An exemplary sequence of actions is given by:

1. login,
2. browse different combined flight and five star hotel options in Greece,
3. choose a five star hotel with a pool and "all-inclusive" service,
4. rent a small city-car
5. pay 1 to 5 min after choosing by advance bank-transaction over bank "XY"
6. logout from the booking application

As sequences of actions when using an application indicate habits of the user they are suitable for user verification purposes. Therefore such sequences are modelled by a feature-specific user-behavior model.

The feature-specific behavior-model characterizing the relationship between the individual actions of the sequence of actions is a Markov-chain model.

Markov-chain Models model a random system with a plurality of states here: an action taken by the user, wherein each of these states has an associated transition probability to another state. The behavior of a user when, for example, booking a flight or a hotel can be seen as such a random system with a plurality of states. In a Markov model, which is a so called "memoryless" model, the transition probabilities from one state to another depend only on the current state, not on the previous states.

The transition probability form a preceding "step A", for example, "browse five star hotels" to succeeding "step B", for example, "book a three star hotel", is for example given by:

$$\Pr(X_i = B \mid X_{i-1} = A) = 0{,}01$$

The total probability of complete sequence of six successive actions, $X_1$ to $X_6$ performed by the user from a time $t=1$ to a time $t = 6$, each timestamp being associated with a certain user activity, is, given by:

$$P(X_1, \dots X_6) = P(X_1) \prod_{t=2}^{t=6} P(X_{t-1}X_t)$$

, wherein $P(X_1, \dots X_6)$ is the total probability of the six successive actions to be performed, $X_1$ to $X_6$, $P(X_1)$ is the probability that action $X_1$ is performed, and $P(X_{t-1}X_t)$ is the transition probability from a step $X_{t-1}$ to a step $X_t$.

Those six actions labelled as $X_1$ to $X_6$ could for example be the previously described six actions performed by the user when booking a combined hotel and flight offer.

Not only one method can be applied to create a feature-specific user behavior-model, but rather different feature-specific user behavior models relating to the same feature, e.g. a sequence of actions, can be obtained by analyzing the same feature values by different analyzation methods.

To provide an example, a sequence of actions can be mapped to a feature-specific user behavior model realized as a Markov chain model or to a similarity-based model wherein the actions are combined to a feature vector and a centroid of a plurality of such feature vectors is calculated.

In some embodiments, the feature-specific user behavior models are also application specific. As mentioned above, the user model may have specific parts for different applications, as a certain behavior patterns may vary for a user depending on the application. These specific parts of the user model are for example realized as feature-specific user behavior models that are also application specific. Hence, there is, for example, a feature-specific user-behavior model associated with the exemplary feature session duration for application "X" and another feature-specific user-behavior model for application "Y". Consequently, the different feature-specific behavior-models, which are associated with different applications, are compared with features obtained from current user activities performed by the user on different applications to determined feature-specific risk-score values associated with these different applications. Such feature-specific risk-score values are further explained below.

In some embodiments, determining the total risk-score value comprises determining feature-specific risk-score values based on a deviation between a plurality of feature values and the respective feature-specific user-behavior models.

The user-verification process comprises determining a plurality of feature-specific risk-score values. A feature-specific risk-score value is a value that quantifies the risk of a certain values of features to be fraudulent with respect to user authenticity. There is, for example, a feature-specific risk-score value associated with the login times (connection times) of a user and another feature-specific risk-score value associated with the session duration or the origin of a request.

Determining a feature-specific risk-score value of the plurality of feature-specific risk-score values comprises comparing the at least one adaptive feature-specific user-behavior model with a respective feature extracted from user activity in a user-session on the application-server.

To provide an example, when sequence of actions is the feature at question, a current sequence of actions performed by the user, is compared with the adaptive feature-specific user-behavior model associated with that feature. This comparison is, for example, achieved by calculating a distance of the feature vector built by the above described current sequence of actions to a centroid of a cluster of previous sequences. This distance can, for example, serve as the risk-score value specific to the feature "sequence of actions".

The calculation of feature-specific risk-score values associated with the feature time stamps, is further explained for the case that a Gaussian-mixture model is used as the feature-specific behavior model associated with time stamps of user activities.

Calculating the feature-specific risk-score value associated with the time stamps of the user activities comprises evaluating a complement of the probability of the time stamp extracted from the actions of the user, the complement being taken from the Gaussian-mixture model.

When the probability of a certain time-stamp of a user-activity, for example, a connection request to an application on the application server, is P(x), then the complement of the probability of the time stamp is 1 - P(x). Thereby, when the probability of a certain time stamp is, e.g. 0.05, normalized from 0 to 1, the feature-specific risk-score value associated to the time stamp is 0.95. Alternatively, an exponential scoring function is used, e.g. *Score:*

$$s = exp^{\left(-\frac{P}{1-P^{\alpha}}\right)}$$

, wherein P corresponds to P(x) defined above. By tuning the parameter $\alpha$ different scoring models can be obtained.

The feature-specific risk score value, associated with the class of features client information is, for example, given by a combination of feature-specific risk-score values associated with individual features of this class, such as the internet browser used, the user agent, operating system information and client computer-type information. The feature-specific risk-score value associated with client information is, in this way, rather a pre-combined feature-specific risk score value but not a total risk-score value.

In some embodiments, calculating the feature-specific risk-score value associated with the duration of user sessions comprises calculating the difference between the duration of a user session and at least one of (i) a moving average, (ii) a median of durations of user sessions, and/or comparing the duration of a user session with confidence intervals, given by multiples of the standard-deviation.

A difference between a momentary session duration, e.g. the time that has passed since the log-in time of the user, or the duration of the last already closed session, and the moving average of the, e.g. the last 100 session durations serves, for example, as the adaptive feature-specific risk-score value associated with the duration of user sessions. The higher, for example, the absolute value of this difference is, the higher is the fraud probability.

Same is true for the median value of the durations of user sessions. Also in this case, the difference or the absolute value difference between a momentary session duration or the duration of the last already closed session and the median of the last, e.g. 100, session durations, serves, for example, as the adaptive feature-specific risk-score value associated with the duration of user sessions.

Also confidence intervals, for example, given by multiples of the standard-deviation of a probability deviation of the session durations ($1\sigma$, $2\sigma$, $3\sigma$), can be used when calculating the feature-specific risk-score value. The probability that a session duration lies within a range (confidence interval) of $\mu \pm 1\sigma$, wherein $\mu$ is the expectation value and $\sigma$ is the standard-deviation, is approximately 68.27%, whereas the probability that a session duration lies within a confidence interval of $\mu \pm 2\sigma$ is 95.45%. Hence, as can be seen from these numbers, the probability that a session duration does not lie within these intervals is 31.73%, or 4.55% respectively. Hence the complement of these probabilities is, for example used as the risk-score value. In this way, a session duration value that does not lie within the $\mu \pm 2\sigma$ confidence interval is, for example, with a fraud-probability of 95.45% and a risk-score value corresponding thereto.

Calculating the feature-specific risk-score value associated with the sequence of actions performed by the user comprises determining a complement of the Markov-probability of a given sequence of actions extracted from the actions of the user.

The complement of the Markov-probability, in this context, is the probability that a certain user does not perform a "step B" after a "step A". If, for example, a user has the habit to pay by advance bank-transaction after a booking a flight, this transition from "book a flight" (step A) to "pay by advance bank-transaction" (step B) the Markov probability of this (partial) sequence might have a value of 0.95. The complement of the Markov probability is 0.05, hence, the feature-specific risk score-value of this sequence of actions is corresponding to this complement and is thereby quite low. However, if another transition with a quite low transition probability is performed, the feature-specific risk score value is quite high. To provide an example, if usually a user does not ever forget his or her password, a multiple trial to login with (due to not correct password entry), corresponding to a transition probability of a "step A" to the same "step A", is then associated with a high complement of the Markov probability and therefore a high feature-specific risk score value.

Also the Markov complement of not only a transition probability but the complement of the Markov probability of a particular sequence of actions is, for example, used as a feature-specific risk score value. When $P(X_1, ... X_6)$ is the total probability of six successive actions, the complement of this probability is given by $1 - P(X_1,...,X_6)$. Again here high complements correspond to high feature-specific risk-score values.

In some embodiments, the total risk-score value is determined by an adaptive risk-score engine, wherein the adaptive risk-score engine is programmed to determine the feature-specific risk score values and to combine the feature-specific risk-score values according to their relative fraud-probability to obtain the total-risk-score value.

When performing the user-verification process, the instructions cause the processor to determine a total risk-score value indicative of user non-authenticity. Determining the total risk-score value comprises a) weighting and combining the plurality of feature-specific risk-score values, or b) weighting and combining pre-combined risk-score values. The pre-combined risk-score values are determined by combining a portion of the plurality of feature-specific risk-score values by relying on Multi-Criteria Decision Analysis (MCDA).

Each risk score value, taken by itself, is only indicative of user non-authenticity with respect to a particular feature. However, particularly, a single behavior, influencing a single feature might be changed by a user from time to time. To provide an example, if someone uses google-chrome® as internet browser instead of Microsoft Internet Explorer®, for a certain period of time, this taken alone is might not be indicative of a fraudulent behavior. Hence, the actual risk score for the user being not the user he or she pretends to be is rather given by the combination of a plurality of individual feature-specific risk-score values.

The individual feature-specific risk-score values can be directly combined to a total risk-score value or some feature-specific risk-score values, for example, belonging to the same class of features, such as features related to client information, can be pre-combined to a pre-combined risk-score value, for example, being associated to different features related to the feature-class client information. In this way, for example, the feature-specific risk-score value associated with the internet browser used might be combined with the feature-specific risk-score value associated with the used operating system the one for the computer type to obtain the pre-combined risk-score value associated with client information.

As not every feature might play the same role when it comes down to fraud protection, as some behavior patterns of a user might me more fluctuating than others, i.e. it is more likely for a certain feature to change than for another feature, not every feature-specific risk-score value might contribute to the total risk-score value with the same weight.

To provide an example, an actual login from China, when the user has logged in three hours ago from France is more indicative of a fraud, than, for example, when the user sends a request from another computer (IP-address) or type of computer (desktop, laptop) than the one he or she usually uses but still from the same country.

Therefore, combining the feature-specific risk-score values, for example, comprises weighting the score values according to their relative fraud-probability.

The feature-specific risk-score values are, for example, weighted according to their relative fraud-probability. This weighting of the feature-specific risk-score values and also the type of combination chosen is, for example, defined by a risk-analyst.

Also the threshold with which the total risk-score value is compared is, for example, adapted to the value of certain risk-score values. In this way, if certain feature-specific risk-score values exceed an individual threshold, or certain behavior patterns - either learned by a neuronal network model or predefined - are detected the overall threshold will be decreased, so that the above described corrective action is issued in any case.

By adaptively combining the weight of the feature-specific risk score values, also synergies between certain criteria, i.e. risk scores associated with certain features, can be taken into account. As in the above example, a high risk-score value associated with time stamp might be high just because somebody is working in the night, however, when also the risk-score value associated with the origin of the request, is high, the weighting of these two factors in the combination yielding the total risk-score value might be potentiated, for example by multiplying hem with a certain number close to the threshold or the like.

However, some other feature-specific risk-score values might be redundant, as for example, when the feature-specific risk-score value associated with the client computer is high, also the feature-specific risk-score value associated with the internet browser is high, as when using another client computer, such as an Android® tablet®, it is likely that also another, preinstalled internet browser, such as Google Chrome® is used instead of Microsoft Internet Explorer® that might be the normal preference of the user on a windows-computer.

Hence, in such cases, the weighting of both feature-specific risk-score values might be decreased relative to their standard weighting in the combination yielding the total-risk score value.

Also such a rule might be chosen by a risk-analyst or might alternatively be found by the method of monitoring user authenticity automatically, for example, by iteratively adjusting weighting factors on the basis of a neuronal network model or the like.

A simple way of combining the feature-specific risk score values, is to use to a weighted average of the feature-specific risk score values. An example of determining the total risk-score value that way is given by:

$$R = \sum_{i=1}^{N} p_i * r_i \,,$$

$$\sum_{i=1}^{N} p_i = 1$$

, wherein R is the total risk-score value, $r_i$ are N different feature-specific risk score values, and $p_i$ are their respective weights.

The feature-specific risk-score values are combined using multi-criteria-decision analysis (MCDA).

The multi criteria decision analysis comprises determining at least one of a weighted ordered-weighted-average and an ordered-weighted average of these values.

Ordered weighted averages and weighted ordered weighted averages are statistical tools of MCDA techniques for vague or "fuzzy" environments, i.e. environments in which the transition between two states, for example, fraud or not fraud, are rather blurred than exactly definable.

Obtaining the total risk-score value involves to use an ordered weighted average of the feature-specific risk-score values. The feature-specific risk-score values are, in this way, weighted by their ordering.

An ordered weighted average of feature-specific risk-score values to obtain a total risk-score value is given by:

$$R(r_1 \ldots r_N) = \boldsymbol{WB}$$

, wherein R is the total-risk score value, $\boldsymbol{W} = (w_1 \ldots w_N)$ is a vector of weights $w_i$, and $\boldsymbol{B} = (b_1 \ldots b_N)$ is a vector of feature-specific risk-score values $b_i$, ordered according to their magnitude beginning with the greatest risk score value as element $b_1$. The weights $w_i$ of vector $\boldsymbol{W}$ are in sum one: $\sum_{i=1}^{N} w_i = 1$.

OWA differs from a classical weighted average in that in the classical weighted average the weights are not associated with position of a particular input in an ordered sequence of inputs, but rather with their magnitude regardless of the position. By contrast, in OWA the weights generally depend on the position of the inputs in an ordered sequence of inputs. As a result OWA can emphasize, for example, the largest, smallest or midrange values. This enables a risk-analyst to include certain preferences among feature-specific risk-score values, such as "most of" or "at least" $k$ criteria (out of N) to have a significant high value for the total risk-score value to become significant as well.

An ordered sequence of inputs (ordered according to decreasing magnitude) may be referred to as **W and** represents a list, or "vector" of inputs. As an example, a risk-analyst might want to emphasize two or more significant high feature-specific risk-score values. Hence, the highest weight in 2nd position in W is selected. When, for example, assuming $B_1 = [\mathbf{0.9}, 0.0, 0.0, \mathbf{0.8}, 0.0]$ and $W_1 = [0, \mathbf{1}, 0, 0, 0]$ an arithmetic mean value of 0.34 and a corresponding $OWA_W$ value of 0.8 would be obtained. When, in another example, assuming $B_2 = [0.2, 1.0, 0.3, 0.2, 0.3]$ and $W_2 = [0, 1, 0, 0, 0]$ an arithmetic mean value of 0.40 and a corresponding $OWA_W$ value of 0.3 would be obtained instead. It is apparent that OWA can make a clear difference between these two vectors of feature-specific risk-score values, whereas the arithmetic mean cannot.

Another possibility of obtaining the total risk-score value is to use a weighted ordered weighted average of the feature-specific risk-score values. The feature-specific risk-score values are weighted by their ordering and importance. This aggregation function combines the advantages of both types of averaging functions by enabling the risk-analyst to quantify the reliability of the feature-specific risk score values with a vector P (as the weighted mean does), and at the same time, to weight the values in relation to their relative position with a second vector W (as the OWA operator).

In the following, W and P are two weighting vectors summing up to 1 with the same meaning as used previously for OWA and Weighted Mean, respectively. A weighted ordered weighted average of feature-specific risk-score values to obtain a total risk-score value is given by:

$$R(r_1 \ldots r_N) = \boldsymbol{UB}$$

, wherein R is the total-risk score value, $\boldsymbol{U} = (u_1 \ldots u_N)$ is a vector of weights $u_i$, and $\boldsymbol{B} = (b_1 \ldots b_N)$ is a vector of feature-specific risk-score values $b_i$, ordered according to their magnitude beginning with the greatest risk-score value as element $b_1$. The weights $u_i$ of vector $\boldsymbol{U}$ are again in sum one: $\sum_{i=1}^{N} u_i = 1$. The weights of U are obtained through a monotone non-decreasing interpolation function G applied to combinatorial subsets of weighting vector $\boldsymbol{P}$, whereby the interpolation function G is defined through a set of points bound to weighting vector $\boldsymbol{W}$. Essentially, the WOWA operator can be seen as an OWA function with the weights $u_i$, which are obtained by combining two weighting vectors $\boldsymbol{W}$ (as used in OWA) and $\boldsymbol{P}$ (as used in Weighted Mean) using a generating function G:

$$\boldsymbol{U} = \text{func}(\boldsymbol{W}, \boldsymbol{P})$$

Again, as an example, a risk-analyst might want to emphasize two or more significant high feature-specific risk-score values and at the same time wants to express the relatively higher importance of features #1 and #4. Hence, the highest weight in 2nd position in U is selected. If one assumed $B_1 = [\mathbf{0.9}, 0.0, 0.0, \mathbf{0.8}, 0.0]$, $W_1 = [0, \mathbf{1}, 0, 0, 0]$ and $P_1 = [\mathbf{0.4}, 0.1, 0.1, \mathbf{0.3}, 0.1]$ an arithmetic mean value of 0.34, a weighted mean value of 0.60, and a corresponding $WOWA_{U,B}$ value of 0.90 would be obtained. When, on the other hand, $B_2 = [0.2, 1.0, 0.3, 0.2, 0.3]$, $W_2 = [0, 1, 0, 0, 0]$, and $P_2 = [\mathbf{0.4}, 0.1, 0.1, \mathbf{0.3}, 0.1]$ an arithmetic mean value of 0.40, a weighted mean value of 0.30 and a corresponding $WOWA_{U,B}$ value of 0.25 would rather be obtained. It becomes clear that WOWA can make an even greater difference between these two vectors of feature-specific risk-score values. As already stated in conjunction with the examples discussed above, the arithmetic mean provides no clear distinction between the different vectors for the examples shown. A weighted mean (WM) yields better distinction than a normal arithmetic mean to some extent; the WOWA provides an even clearer distinction. In the presented example the difference in weighted mean value is only 0.30, whereas the WOWA separates the two cases by 0.65.

Nevertheless, also other combination techniques in the field of MCDA techniques, such as fuzzy integrals are, for example, applied to obtain the total risk-score value. Fuzzy integrals, such as Choquet integrals, are suitable to include positive interactions (synergies) and negative interactions (redundancies) between certain subsets of feature-specific risk-score values into the combination of feature-specific risk-score values. Fuzzy integrals are defined with respect to so-called *fuzzy measures* (or *capacities*), which are *set functions* used to define, in some sense, the importance of any subset belonging to the power set of *N* (the set of features). Fuzzy integrals can be seen as a generalization of all the averaging functions described above.

As described above, the total-risk score value is determined by an adaptive risk-score engine on the application server applying the MCDA technique on the feature-specific risk-score value, after having determined these feature-specific risk-score values.

In some embodiments, the adaptive risk-score engine is adapted on the user-model server by adapting the multi-criteria-decision analysis (MCDA). As described above, the adaptive risk-score engine is, for example, adapted by adapting the weights of feature-specific risk-score values when being combined to the total risk-score value by a MCDA technique, e.g. by changing the above mentioned weight vector

In some embodiments, the adaptive risk-score engine is replicated from the user-model server to the application server after being adapted and the total-specific risk score value is determined by the adaptive risk-score engine on the application-server, on the basis of the user model received from the user-model server.

The features which have been, for example, extracted out of a log-file in order to adapt the user model on the user model server may also be used to adapt the adaptive risk-score engine on the user model server.

As mentioned above, some feature-specific risk-score values might be redundant for the determination of the total-risk-score value as the underlying features might have the same root-cause. When it is determined when adapting the user behavior model that for example such redundant two features, e.g. computer client and operating system have changed, this information might be used to reduce the relative weight of the two feature-specific risk-score values associated with these redundant features is reduced, as they should contribute less to the total-risk score value when both features have changed relative to previous user models than if only one has changed.

The adaptive risk-score engine is replicated to the application server after having been adapted on the user model server. This replication may take place by copying the adapted version of the risk-score engine from the user-model server to the application server as a whole or by copying only a delta between the adapted version of the risk-score engine and the non-adapted version of the risk-score engine.

The above described adaption and replication of the adaptive risk-score engine ensures that always the most up-to-date adaptive risk-score engine is used for the comparison of current user activities with the most up-to-date user model to obtain the feature-specific risk-score values. These feature-specific risk-score values are then combined by the adaptive risk-score engine to the total risk-score value. Thereafter, the total risk-score value is compared with the given threshold(s) stored in the rules cache on the application server. Depending on the outcome of this comparison, a given type of corrective action associated with the case that the total risk-score value is higher than the given threshold associated with the type of corrective action is triggered or not.

In some embodiments, user-access to the application server is controlled by a logon-and-security server at a start of a user-session and the total risk-score value is compared with the given threshold on the application server, wherein the corrective action is executed by an access control during the user session, wherein the access control is comprised by the application server.

The user-access to the application server is, for example, controlled by the logon-and-security server by a role-based access control. The role-based access control comprises checking a username of the user against an access-control list comprising different security or access-right levels for different users. When the security or access-right level of the user is sufficient and the user, for example, enters the correct password associated with this username, the user is logged on the application.

When a total risk-score value has been determined by the adaptive risk-score engine on the application server, this total risk-score value is compared with the given threshold(s), for example, stored in the rules cache on the application server. If the total risk-score value is, for example, higher than the first threshold, a corrective action, such as a two-factor-authentication request may be prompted to the user. An access control, located on the application server, is, for example, informed about the threshold violation of the total risk-score value, by the rules cache. The rules cache, for example, sends the two-factor-authentication request to the logon-and-security server. The two-factor authentication is, for example, carried out by the logon-and-security server, interacting with the user.

According to a second aspect, a distributed server system, the distributed server system comprising at least one application server and at least one user-model server, is provided. The servers comprise at least one processor and at least one non-volatile memory comprising at least one computer program with executable instructions stored therein for a method of monitoring user authenticity during user activities in a user session on the at least one application server. The method is carried out in a distributed manner by means of the distributed server system. The executable instructions, when executed by the at least one processor of the servers, cause the at least one processor to

Perform a user-modelling process in which an existing user model is adapted session-by-session to user activities,

Perform a user-verification process comprising

- comparing the user model with features extracted from user activity in the user session on the application server,
- determining a total risk-score value on the basis of the comparison,
- in response to the total risk-score value exceeding a given threshold, a corrective action is performed, wherein the corrective action comprises at least one of (i) signing out the user, (ii) requesting a two-factor authentication from the user, (iii) locking the user, and (iv) initiating an alert function.

The user-modelling process being performed on an user-model server, wherein the user model is adapted to user-activity data received from the application server and the user-verification process is performed on the at least one application server, wherein the user-verification process is performed on the basis of the user model adapted on the user-model server.

In some embodiments, the executable instructions, when executed by the processors of the servers, further cause the processors to carry out any of the activities described above.

## BRIEF DESCRIPTION OF THE DRAWINGS

Exemplary embodiments of the invention are now described, also with reference to the accompanying drawings, wherein

Fig. 1    is a schematic overview of an exemplary distributed server system carrying out an exemplary method of monitoring user authenticity,

Fig. 2    schematically illustrates a feature extraction from an application specific log file,

Fig. 3a    is a schematic block-diagram of an exemplary method of monitoring user authenticity with a single feature-specific risk-score value for each feature and a one-step combination of the feature-specific risk-score values using MCDA techniques,

Fig. 3b    is a schematic block-diagram of an exemplary method of monitoring user authenticity with a single feature-specific risk-score value for each feature and a two-step combination of the feature-specific risk-score values using a MCDA technique,

Fig. 3c    is a schematic block-diagram of the exemplary method of monitoring user authenticity with two feature-specific risk-score values resulting from two different user models for each feature and a two-step combination of feature-specific risk-score values using a MCDA technique,

Fig. 4    illustrates the combination of feature-specific risk-score values using a weighted ordered weighted average or an ordered weighted average,

Fig. 5    illustrates a Gaussian-mixture model of a probability distribution of time stamps of user activities,

Fig. 6    schematically illustrates a Markov-Chain model of a sequence of actions performed by the user,

Fig. 7    is a schematic flowchart of an exemplary method of monitoring user authenticity,

Fig. 8    is a risk profile illustrating a plurality of feature-specific risk-score values and a fraud probability,

Fig. 9    illustrates an exemplary computer system used for carrying out the method described herein.

The drawings and the description of the drawings are of examples of the invention and are not of the invention itself. Like reference signs refer to like elements throughout the following description of embodiments.

## DESCRIPTION OF EMBODIMENTS

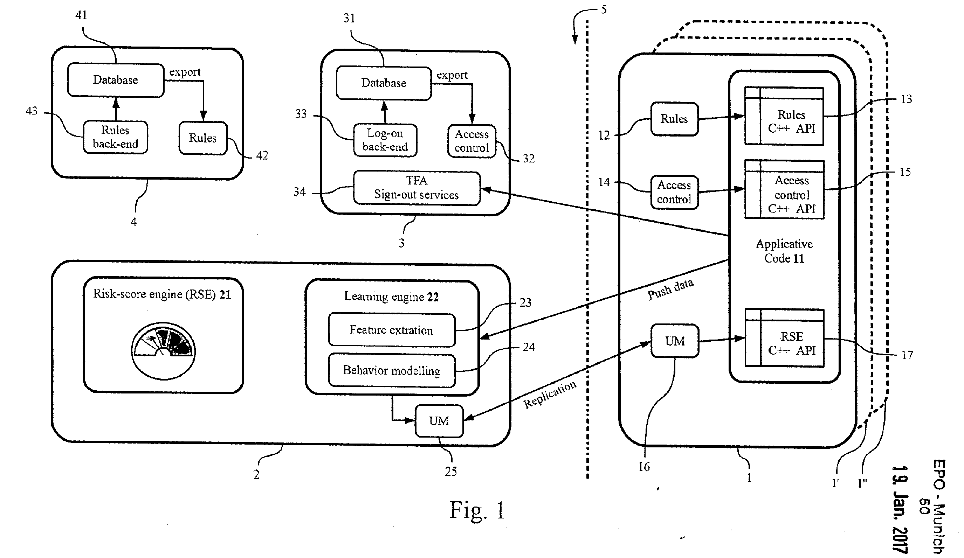

A schematic overview of an exemplary distributed server system 5 that is arranged to perform an exemplary method of monitoring user authenticity is illustrated in Fig. 1. The servers 1, 1', 1", 2, 3, and 4 each comprise one or more processors and non-volatile memory containing one or more computer programs with executable instructions stored therein for a method of monitoring user authenticity during user activities in a user session on the at least one application server 1, 1', 1". The vertical dotted line illustrates a physical, i.e. spatial, separation of the application server 1 from the other servers 2, 3, and 4. The executable instructions, when executed by the processor(s) of any one of the servers 1, 2, 3, or 4 cause the processors of the servers 1, 2, 3, 4 to perform the exemplary method described in the following: A daemon (not shown), running on the at least one application server 1, 1', 1", pushes application-log data 60 to a learning engine 22, being executed on a user model server 2. The application log data 60 comprises information about the activities the user performs on the application(s) that are given by applicative code 11.

The method described can be performed for a plurality of different applications 11 running on a single application server 1 or for a plurality of different applications 11, each running on a different server 1, 1', 1" or a combination thereof. For the sake of simplicity, the method is described in this description of embodiments for one application server 1 and activities a user performs on one application 11 running on this application server 1.

The user-model server 2 is connected to the application server 1 via a network, such as the internet, a local-area network (LAN), or a metropolitan-area network (MAN), wide-area network (WAN) or the like. The learning engine 22 comprises a feature-extraction module 23 and a behavior-modelling module 24. The feature-extraction module 23 parses the application-log data 60 using various automatic log-parsing techniques, in order to extract features relevant for adapting an existing user model 25, residing on the user-model server 2. The extracted features comprise, for example, a sequence of actions performed by the user, user info 81, such as office or organization information, time info 82 in form of connection times, i.e. the time-stamp of the user-connect request, session durations 83, client information 84 and origins of the user requests 85.

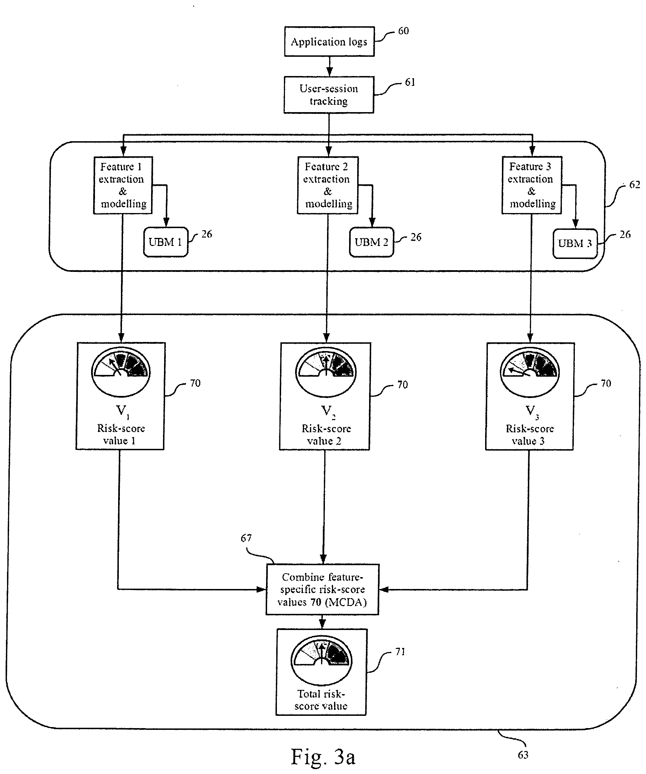

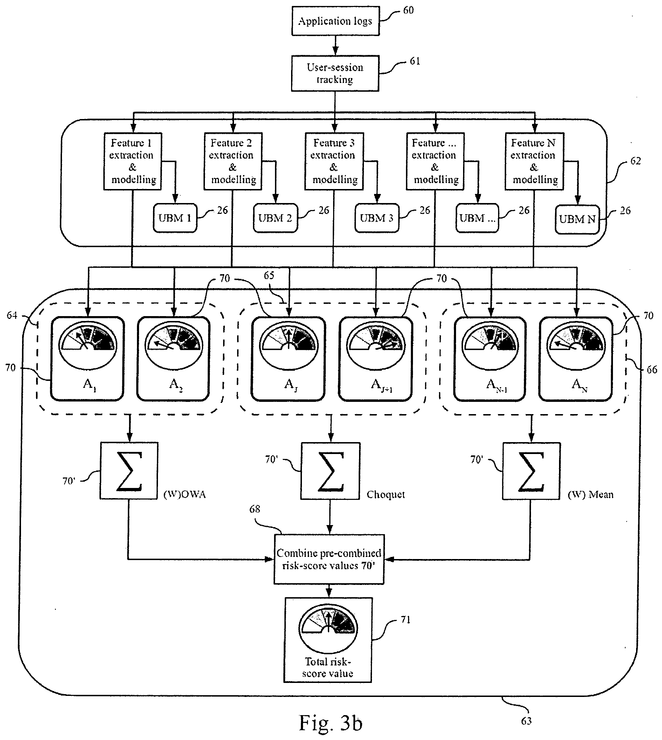

The extracted features are transmitted to the behavior modelling module 24 that adapts the existing user model 25 according to the extracted features. The existing user model 25 is adapted by adapting feature-specific user-behavior models 26 associated with the extracted features, as shown in figures 3a and 3b. The feature-specific user-behavior models 26 are further used as an input for a risk-score engine 21, also residing on the user-model server 2. The risk-score engine 21 is adapted to the feature-specific user-behavior models 26 by adapting, for example, a weight of feature-specific risk-score values 70 in a multi-criteria-decision-analysis (MCDA) technique for combining the feature-specific risk-score values 70 to a single total risk-score value 71. The feature-specific risk-score values 70 are obtainable on the basis of the feature-specific user-behavior models 26.

Both the (adapted) user model 25 and the (adapted) risk-score engine 21 are replicated on the application side, i.e. copied from the user-model server 2 to the application server 1 over the network. On the application side, i.e. the right-hand side of the vertical dotted line in Fig. 1, the latest user activity is recorded in a journal. The replicated risk-score engine 17 compares the features extracted from this journal with the replicated user model 16, more precisely, with the feature-specific user behaviour models 26 comprised by the replicated user model 16. In this way, the replicated risk-score engine 17 obtains feature-specific risk-score values 70 and combines them according to the weight of these values 70 to a total risk-score value 71.

The total risk-score value 71 is compared to a given threshold by an access-control application 14 that is connected to the application by an access-control-application interface 15. The given threshold is defined in a rules cache 12, replicated from a rules cache 42, originally built on an rules server 4. When the total risk-score value 71 exceeds the given threshold from the rules cache 12, the access-control application 14 triggers a corrective action 72 that is predefined in the rules cache 12. The corrective action 72 depends on the actual value of the total-risk-score value 71, and hence, on the threshold exceeded. The triggered corrective action 72 is, for example, carried out by a corrective-action module 34 on an logon-and-security server 3. The corrective action 72 is one of (i) signing out the user, (ii) requesting a two-factor authentication from the user, (iii) locking the user, and (iv) initiating an alert function. To provide an example, there are three thresholds each corresponding to a different corrective action 72. If the total risk-score value 71 is above a first threshold a two-factor authentication is requested from the user, if the total risk-score value 71 is above a second threshold the user is signed out, whereas when the total risk-score value 71 is above a third threshold the user is locked.

However, the corrective action 72 can also be triggered by the access-control application 14, when a certain feature pattern is detected in the user activities that corresponds to a predefined feature pattern stored in the rules cache 12. Thereby, some actions of the user cause a certain corrective action 72, regardless of the total risk-score value 71. The predefined feature patterns are, for example, defined by a risk-analysis technician on the rules server 4 and exported to the rules cache 12 on the application server 1 after the definition of the feature pattern.

If the total-risk-score value 71 is below the given thresholds, no corrective action 72 is applied and a new log data 60, comprising logged activities of the user during the user session is transmitted to the learning engine 22 at the end of the session, i.e. when the user has logged out from the application. The user model 25 is again adapted to features extracted from the log data 60 as described above. In this way, user authenticity is verified and the user model 25 as well as the risk-score engine 21 are adapted to the activities of the user in a user session on a session-by-session basis.

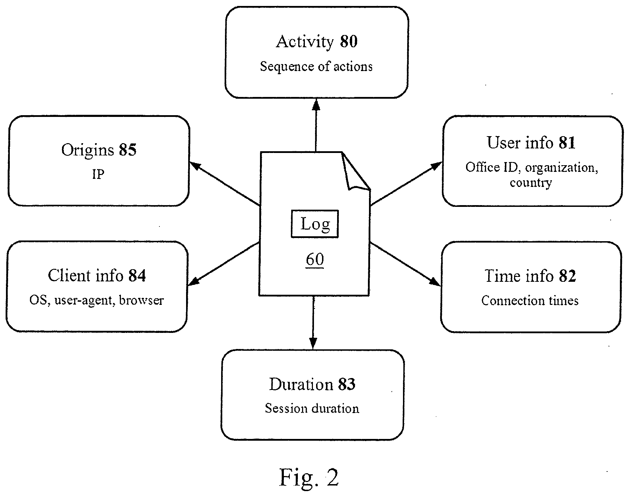

A schematic feature extraction from an application-specific log file 60 is illustrates in Fig. 2. Features are extracted from the log data 60' of an application, in which the activities of the user during the user session are recorded. The extracted features comprise, for example, the activities 80 performed by the user, such as a sequence of actions performed by the user. Another example of an extracted feature is user information 81, such as office/organization information, time info 82 in the form of connection times, i.e. the time-stamp of the user-connect request. Furthermore, session durations 83, hence the time passing between a login of the user and a logout of the user, can be extracted from the log file 60 as a feature. Examples for further features are client information 84, such as the type of internet browser used, the type of computer used or the operating system used, etc. and origin of the user requests 85, for example, given by the IP addresses of the requests or the region an IP address can be associated with.

The features are extracted from the log data 60', for example, by parsing a log file 60 by various parsing algorithms and reconstructing the user session by sequencing the information gathered by the parsing algorithms, so that the parsed information reflects the successive activities performed by the user when using the application. The sequencing can be based on timestamps or on logical conditions linking the actions. Since a user can only pay when he or she has already been redirected to a banking application, this provides an example of such a logical condition. The reconstruction of the user session is hereinafter referred to as user-session tracking 61 (not shown in Fig. 2).

A schematic block-diagram of an exemplary method of monitoring user authenticity with a single risk score value for each feature and a one-step combination of feature-specific risk-score values 70 using MCDA techniques is shown in Fig. 3a.

In a first activity, application log(s) 60 obtained from one or more applications on the application server 1 are used to reconstruct user session(s) by user-session tracking 61, as described above. In the exemplary method illustrated in Fig. 3a, three different features are extracted:

> 1. the origin 85 of the user activity, e.g. the IP address of an HTTP request;
> 2. the time info 82, i.e. connection time stamps of the user;
> 3. the duration 83, i.e. the user-session duration.

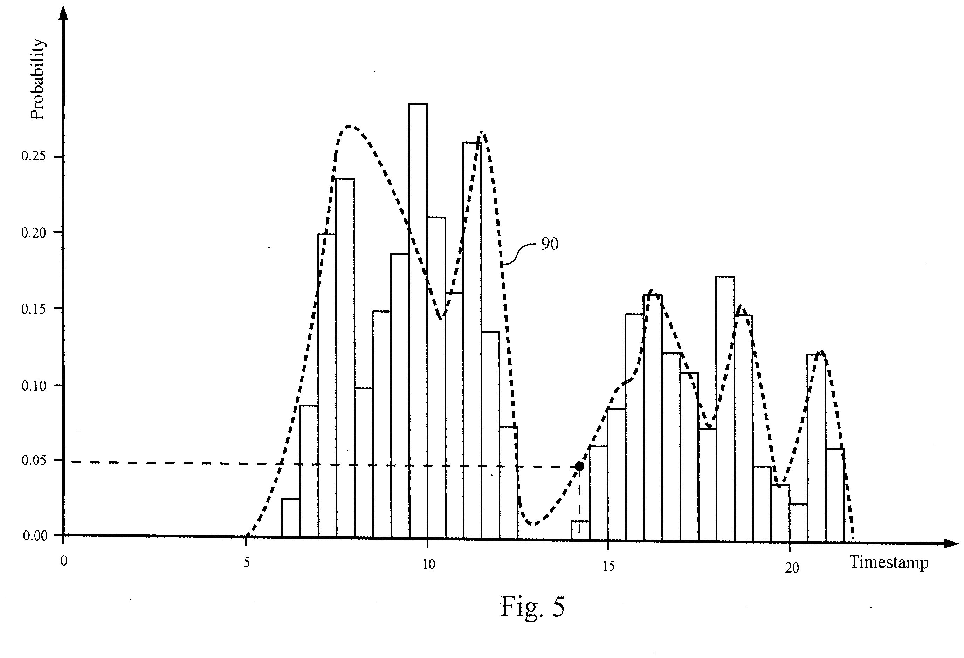

According to the value of these three exemplary extracted features, the feature-specific user-behaviour models 26 associated with these features are adapted. The origin of the user activity may be modelled by associating probabilities to geographical regions, e.g. countries, districts, or the like, according to the frequency the user performs an activity originating from these regions, for example, when the user submits a request from a particular city. The connection time stamps of the user may be modelled by a distribution function, for example, by a Gaussian-mixture model of these time stamps, as shown in Fig. 5. Expected session durations are, for example, modelled by mapping calculated session durations to mean values of session durations, deriving an upper quantile of session durations after finding a probability distribution of session durations, etc.

These feature-specific user-behaviour models 26 are adapted to the newly acquired feature values (the feature values extracted from the log data 60') by modifying existing datasets and deriving new distributions on the basis of the new data sets. The result are three adapted feature-specific user-behaviour models 26, in Fig. 3a indicated by the boxes "UBM 1", "UBM 2", and "UBM 3".

These feature-specific user-behaviour models 26 are used as an input for the risk-score engine 21, shown in Fig. 1. The risk-score engine 21, compares current activities performed by the user in a user session with the feature-specific user-behaviour models 26. By this comparison a number indicating a probability that the current user activity is actually not performed by the user to whom the user model 25 belongs and thereby, the probability of a fraud, is generated. These numbers are feature-specific risk-score values 70; one for the connection time stamps (time info 82), one for the origin of the activities (origins 85), and another one for the durations of user sessions (duration 83). These numbers are typically normalized between 0 and 1.

These feature-specific risk-score values 70 are combined 67 by a MCDA technique to obtain a total risk-score value 71. For example, a weighted ordered weighted average (WOWA) is used, wherein the feature-specific risk-score value 70 associated with origins of the user activities and the feature-specific risk-score value 70 associated with connection time stamps are weighted twice as high as the feature-specific risk-score value 70 associated with the duration of sessions.

A schematic block-diagram of an exemplary method of monitoring user authenticity with a single feature-specific risk-score value 70 for each feature and a two-step combination of the feature-specific risk-score values 70 using a MCDA technique, is shown in Fig. 3b. As described in conjunction with Fig. 3a, feature-specific user behaviour models 26 are modelled from of the extracted features.

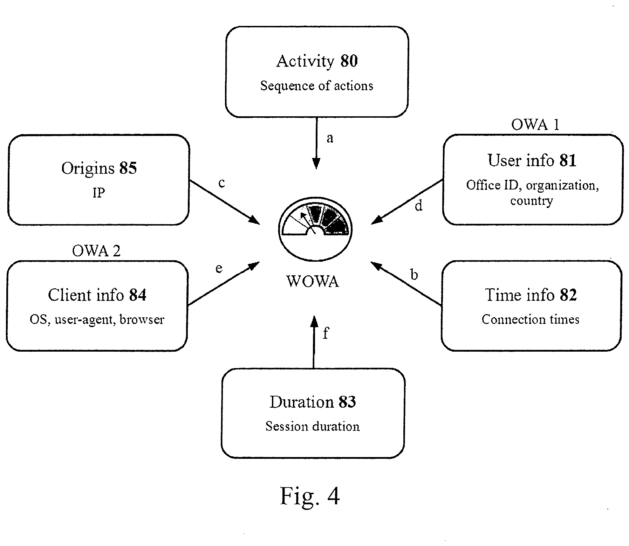

As indicated by arrows connected by a common bar leading to a plurality of feature-specific risk-score values 70, each feature-specific risk-score value 70 associated with a feature-specific user behaviour model 26 is calculated by the risk-score engine 17. In the exemplary method illustrated by Fig. 3b, the feature-specific risk-score values 70 are pre-combined to risk-score values 70', i.e. subgroups of functionally related feature-specific risk-score values 70. To provide an example, a feature-specific risk-score value 70 associated with client-specific information, such as the used operating system and a feature-specific risk-score value 70 associated with the used web browser and the computer type used (tablet, personal computer etc.) are pre-combined via an ordered weighted average to a pre-combined risk-score value 70' associated with client information (client info 84), as shown in Fig. 4. Furthermore, for example, the feature-specific risk-score value 70 associated with the origins of the user activity (origins 85) and the feature-specific risk-score value 70 associated with the office or organization identifier are pre-combined to a pre-combined risk-score value 70', associated with origin and office, using a Choquet-integral. A third pre-combined risk-score value 70', associated with user-specific connection times and session durations is obtained by calculating a weighted average of the feature-specific risk-score value(s) 70 associated with connection times and the feature-specific risk-score value 70 associated with session duration.

These three exemplary pre-combined risk-score values 70' are combined 68 to a total risk-score value 71 by a MCDA technique, such as a weighted ordered weighted average.

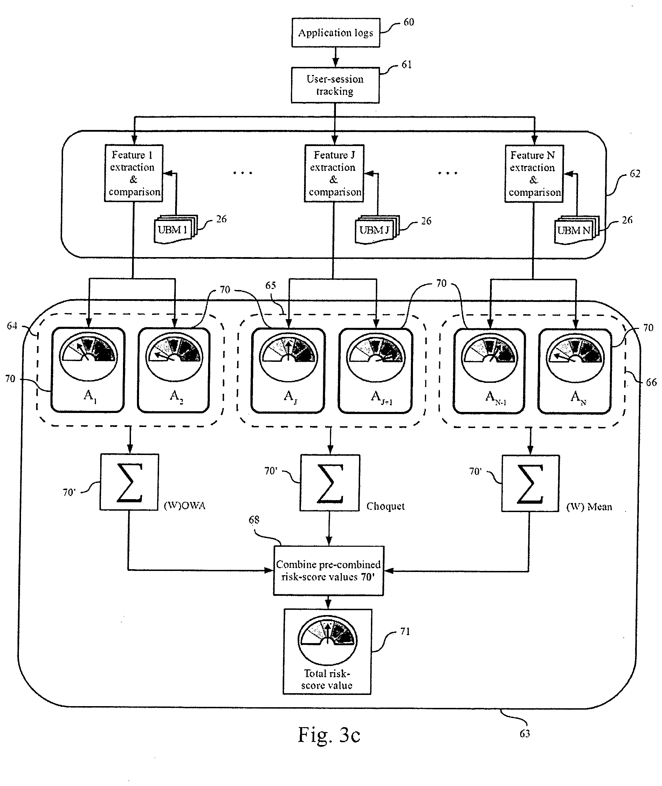

A schematic block-diagram of an exemplary method of monitoring user authenticity with two feature-specific risk-score values 70 resulting from two different feature-specific user-behaviour models 26 for each feature and a two-step combination of the feature-specific risk-score values 70 using a MCDA technique is illustrated by Fig. 3c.

In the exemplary method shown in Fig. 3c, feature-specific risk-score values 70 are obtained by applying different statistical methods and/or evaluation models (in the context of Fig. 3c also referred to as feature-specific user-behaviour models 26) to certain extracted features. For example, one feature-specific risk-score value 70 is calculated by calculating the difference between a current (extracted) session duration with a mean value of the last 100 session durations, while another feature-specific risk-score value 70 is obtained by comparing the extracted session duration with a median duration, e.g. calculating the difference between the current session duration and the median and the direction of the deviation from the median (to higher values or to lower values). These two feature-specific risk-score values 70 for the session duration are pre-combined to a pre-combined risk-score value 70' associated with the session duration (compare to the feature duration 83). Also, for example, sequences of actions are mapped by two different feature-specific user-behaviour models 26 to two different feature-specific risk-score values 70 associated therewith.

One feature-specific risk-score value 70 could be obtained by taking the complement of a Markov-probability of the sequence of actions while another feature-specific risk-score value 70 could be obtained by a similarity-based technique, e.g. by calculating the difference between a feature vector containing the currently extracted successive actions to a centroid of previous feature vectors of successive actions. These two feature-specific risk-score values 70 associated with the sequence of actions are pre-combined, e.g. by a Choquet-integral, to a pre-combined risk-score value 70'. Also, for example, the origins of the user activities are mapped to two feature-specific risk-score values 70, which are obtained using two different modelling techniques. One model, representing a centroid of the last 100 origins of user requests (here referred to as feature-specific user behaviour model 26), is, for example, used to calculate the differences between a current (extracted) origin of user activity and a centroid of the last 100 origins of user requests (representing user activities) and maps it to a feature-specific risk-score value 70. Another model, for example, compares the current (extracted) origin with a statistical distribution of origins of user activities and obtains the feature-specific risk-score value 70 as the complement of the probability of the current origin according to the statistical distribution. These two feature-specific risk-score values 70 are, for example, pre-combined to a pre-combined risk-score value 70' by a weighted average.

The pre-combined risk-score values 70' are then combined 68 to obtain a total risk-score value 71. The individual pre-combined risk-score values 70' may be also weighted before the combination 68.

An exemplary combination of feature-specific risk-score values 70 and/or pre-combined risk-score values 70' to a total risk-score value 71 is illustrated by Fig. 4.

A feature-specific risk-score value 70, associated with a sequence of actions (activity 80), is determined. Also a pre-combined risk-score value 70' associated with user info 81 (office ID, organization identifier, etc.) is determined by a weighted ordered average of feature-specific risk-score values 70 associated with the office ID, the organization identifier, and the country. Furthermore, a feature-specific risk-score value 70 associated with time info 82, in this example connection times, as well as a feature-specific risk-score value 70 associated with duration 83, in this example duration of sessions, is determined. Another ordered weighted average of feature-specific risk-score values 70 associated with the clients' operating system and the clients' browser is determined. This ordered weighted average is a pre-combined risk-score value 70' associated with client info 84. Another feature-specific risk-score value 70 associated with the origins of the user activities (origins 85) is also determined.

The above mentioned feature-specific risk-score values 70 and pre-combined risk-score values 70' are combined to a total risk-score value 71 by a weighted ordered weighted average of these values. The position of the feature-specific risk-score values 70 and pre-combined risk score values 70' in this weighted ordered weighted average is indicated by letters beneath the arrows leading to the weighted ordered weighted average. Hence, the feature-specific risk-score value 70 associated with the activity 80 with the label "a" is the first summand in the weighted ordered weighted average and the pre-combined risk-score value 70' associated with client info 84 with the label "e" is the last summand in this weighted ordered weighted average.

A Gaussian-mixture model of a probability distribution of timestamps of user activities is given by Fig. 5. The Gaussian-mixture model is an example for a feature-specific user-behaviour model 26 associated with the timestamps of user activities. The exemplary user activity evaluated in the diagram of Fig. 5 is a connection time, i.e. the point in time when the user logs onto the application server 1.

The diagram illustrated by Fig. 5 is a timestamp vs probability diagram. The time axis covers 24 hours in total. The probability that a user logs on within a certain 0.5 h interval, e.g. from 20:00 to 20:30 is illustrated by the bars shown in Fig. 5. A Gaussian-mixture model, for example, consisting of a mixture of ten Gauss-distributions with different expectation values and different standard deviations, fitted to the bars, is indicated by the dashed curve covering the bars.

A current login in the time interval between 14:00 and 14:30 is designated by a mark, connected to the timestamp axis and probability axis in the Gaussian-mixture curve. Hence, a probability of 0.05 is associated to this login. The complement of this probability (0.95), for example, can be used as the feature-specific risk-score value 70 associated with the timestamps, e.g. the connection times of the user.

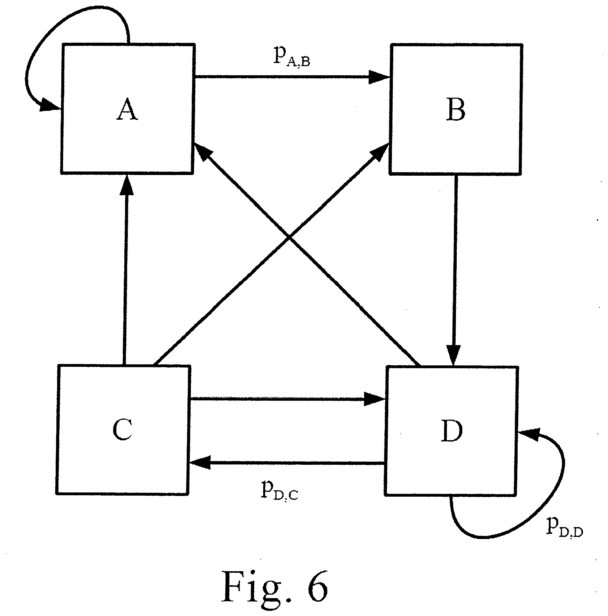

An exemplary Markov-Chain model of a sequence of actions (activities 80) performed by the user is illustrated by Fig. 6. Four different states, corresponding to exemplary activities carried out by the user, are illustrated by quadratic boxes "A", "B", "C", and "D". Transitions between these states are indicated by arrows pointing from one state to another. Three exemplary transition probabilities, i.e. the probability that a particular transition is actually carried out, namely "$P_{A,B}$", "$P_{D,C}$", and "$P_{D,D}$" are indicated by respective labels beneath the arrows illustrating the transitions. These transition probabilities, for example, may be "$P_{A,B}$" = 0.2, "$P_{D,C}$" = 0.4, and "$P_{D,D}$" = 0.1.

The state "D", for example, can be a password entry by the user when signing into an application, such as a booking application. A transition probability from the state "D" back to the state "D" therefore corresponds to the probability that the same user re-enters his or her password, e.g. because of a typo. The state "A", for example, may represent a password change, whereas the state "C" may represent a user-name change. The state "B" may represent a request of sending the user password to the registered email address of the user. The sum of all transition probabilities from one state to one or more other states or to the state itself is unity.

The probability of a certain path of states, e.g. from state "D" to state "A" via state "C" is given by the product of the transition probabilities of the individual transitions "D" to "C" and "C" to "A".

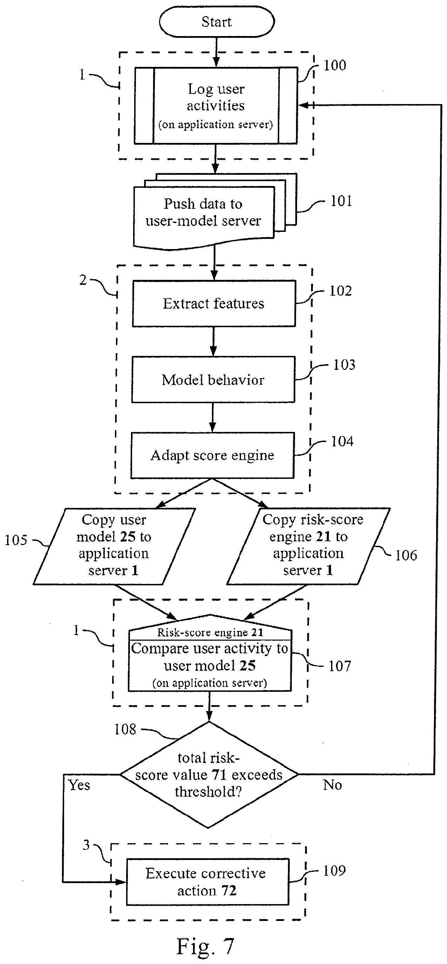

An exemplary process flow of an exemplary method of monitoring user authenticity is illustrated in Fig. 7. Dashed rectangular boxes, which surround individual steps of the described process flow (see steps 100, 102, 103, 104, 107, and 109), indicate a server on which the respective steps are performed. At step 100 user activities on the application server 1 are logged in a log file 60. The log data 60' comprising the user activities is pushed from the application server 1 to the user-model server 2, as indicated by step 101. On the user-model server 2 three different steps are performed, namely steps 102, 103 and 104, as indicated by the dashed rectangular box labelled "2". In step 102 features are extracted from the log data 60' and in step 103 an existing user model 25 is updated by including the newly extracted features into the user model 25. Also, the risk-score engine 21 is adapted in step 104 by changing the weight of particular feature-specific risk-score values 70 in a calculation formula of the total risk-score value 71, according to the newly acquired feature values. This is, for example, achieved by decreasing the weight of the to-be-determined feature-specific risk-score value 70 (on the application side) associated with the operating system when the extracted feature values indicate that the client computer has been changed.

As indicated by steps 105 and 106, the adapted user model 25 and the adapted risk-score engine 21 are copied from the user-model server 2 to the application server 1. On the application server 1 the current user activity is kept in a journal and feature values associated with these activities are compared with the respective feature-specific user behaviour models 26 by the risk-score engine 21 in step 107. As a result of this comparison feature-specific risk-score values 70 are obtained and combined to a total risk-score value 71, using a MCDA technique. In step 108, the total risk-score value 71 is compared with a given threshold obtained from a rules cache 12 (shown in Fig. 1). As long as the total risk-score value 71 does not exceed the given threshold during a user session the method of monitoring user authenticity continues by carrying out steps 100 to 108 at the end of a user session. In response to the total risk-score value 71 exceeding a given threshold during a user session the execution of a corrective action 72 is demanded by an access-control module 14 on the application server 1. Thereupon, the corrective action 72 is carried out by the corrective-action module 34 on a logon-and-security server 3. Depending on the specific threshold that has been exceeded by the total risk-score value 71, one of the following corrective actions 72 is chosen: (i) signing out the user, (ii) requesting a two-factor authentication from the user, (iii) locking the user, (iv) initiating an alert function.

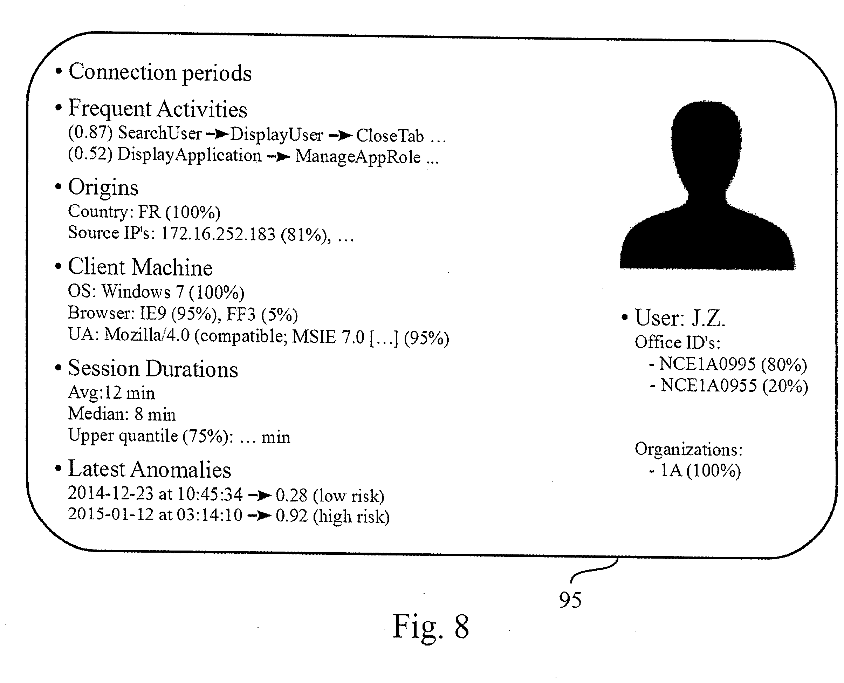

A user profile illustrating a plurality of feature-specific user-behaviour models 26 yielding a fraud probability is illustrated by Fig. 8. In the user profile shown in Fig. 8, various feature values and probabilities for certain feature values are displayed.

In a first section of the user profile, a feature-specific risk-score value 70 of 0.87, associated with a sequence of actions, is assigned to a first sequence of actions, namely: "Search user" → "Display user" → "Close tab", whereas a feature-specific risk-score value 70 of 0.52 is assigned to a second sequence of actions, namely: "Display application" → "ManageAppRole".

In a second section of the user profile, probabilities associated with the origins 85 of the user activities are displayed. The probability for a user activity of this particular user being issued from France is 100%. The probability that the source-IP for this user is 172.16.252.183 is given as 81%.

In a third section of the user profile, probabilities associated with the client computer used are listed. The probability for a Windows 7® operating system being used is stated to be 100%. The probability that Internet Explorer 9® is used as internet browser by the user is stated to be 95%, whereas the probability that Firefox 3® is used as internet browser is listed to be 5%. Furthermore, the probability that the user agent is Mozilla/4.0® (compatible; MSIE 7.0 ...) is obtained to be 95%.

In a fourth section of the user profile, data of the session durations of the user are stated. The average session duration is 18 min, the median of the session durations is 8 min, and also the time in which the session duration is in the upper quantile (in the upper 75% of a probability distribution representing the session durations) is obtained and stored in the user profile.

In a fifth section of the user profile, the probabilities for certain office ID's and certain organizations are obtained and stored. The probability that the user activities have an office ID "NCE1A0995" is 80% whereas the probability that the user activities have an office ID "NCE1A0955" is 20%. The probability that the user activities are associated with the organization "1A" is 100%.

Altogether, when the user profile is compared with current user activities and is evaluated, for example, the user profile yields a total risk-score value 71 of 0.28 (low risk) for the date 2014-12-23 at 10:45:34 and a total risk-score value 71 of 0.92 (high risk) for the date 2015-01-12 at 03:14:10.

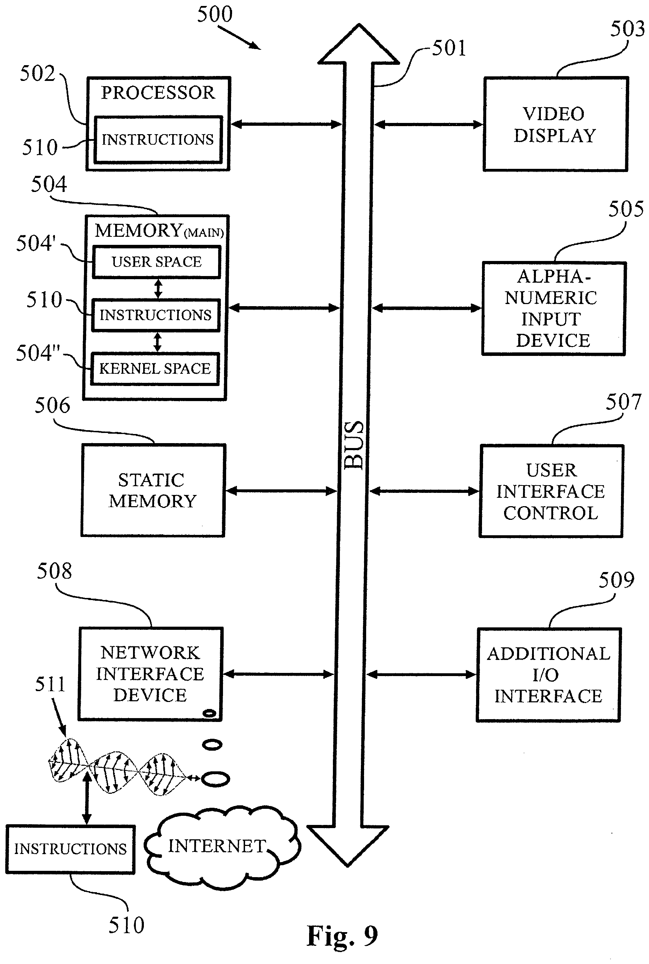

A diagrammatic representation of an exemplary computer system 500 is shown in Fig. 9. The computer system 500 is arranged to execute a set of instructions 510, to cause the computer system 500 to perform any of the methodologies used for the method of monitoring user authenticity during user activities in a user session on at least one application server 1, as described herein. The application server 1, the user-model server 2, the logon-and-security server 3, and the rules server 4, for example, are realized as such a computer system 500.

The computer system 500 includes a processor 502, a main memory 504 and a network interface 508. The main memory 504 includes a user space 504', which is associated with user-run applications, and a kernel space 504", which is reserved for operating-system- and hardware-associated applications. The computer system 500 further includes a static memory 506, e.g. non-removable flash and/or solid state drive and/or a removable Micro or Mini SD card, which permanently stores software enabling the computer system 500 to execute functions of the computer system 500. Furthermore, it may include a video display 503, a user interface control module 507 and/or an alpha-numeric and cursor input device 505. Optionally, additional I/O interfaces 509, such as card reader and USB interfaces may be present.

The computer system components 502 to 509 are interconnected by a data bus 501.

In some exemplary embodiments the software programmed to carry out the method described herein is stored on the static memory 506; in other exemplary embodiments external databases are used.

An executable set of instructions (i.e. software) 510 embodying any one, or all, of the methodologies described above, resides completely, or at least partially, permanently in the non-volatile memory 506. When being executed, process data resides in the main memory 504 and/or the processor 502.

## Claims

1. A method of monitoring user authenticity during user activities in user sessions on at least one application server, the method being carried out in a distributed manner by means of a distributed server system, the distributed server system comprising the at least one application server and at least one user-model server, the method comprising:

    transferring user-activity data from the at least one application server to the at least one user-model server;

    performing a user-modelling process on the at least one user-model server in which an existing user model is adapted to user activities session-by-session, wherein the user model is adapted based on the user-activity data transferred from the at least one application server;

    wherein the user model comprises a plurality of feature-specific user-behavior models, the feature-specific user-behavior models being submodels of the user model associated with a feature indicative of user behavior,

    wherein a feature-specific behavior-model associated with the time stamps of the actions of the user is a Gaussian-mixture model of time stamps of the user activity, wherein the Gaussian mixture model is given by the following formula

$$P(x) = \sum_{i=1}^{N} a_i G_i(x, \mu_i, \sigma_i),$$

    wherein $a_i$ is a weight of the $i$th Gaussian distribution $G_i(x, \mu_i, \sigma_i)$, $\mu_i$ is the expectation value of the $i$th Gaussian distribution and $\sigma_i$ is the standard-deviation of the $i_{th}$ Gaussian distribution and $P(x)$ is the probability of a certain timestamp x, wherein a feature-specific behavior-model characterizing the duration of user sessions maps the duration of user sessions to at least one of (i) a moving average, (ii) a median, (iii) a standard-deviation of the user-session duration, (iv) a quantile of the duration of user sessions, wherein a feature-specific behavior-model characterizing a sequence of actions performed by the user is a Markov-chain model, wherein the Markov-chain model models a random system with a plurality of states corresponding to actions taken by the user, wherein each state has an associated transition probability to another state, wherein a total probability of a sequence of actions $X_1$ to $X_n$ performed by the user from a time 1 to a time n, each timestamp being associated with a certain user activity, is given by:

$$P(X_1, \dots X_n) = P(X_1) \prod_{t=2}^{t=n} P(X_{t-1} X_t)$$

wherein $P(X_1, \dots X_n)$ is the total probability of the n successive actions to be performed, $X_1$ to $X_n$, $P(X_1)$ is the probability that action $X_1$ is performed, and $P(X_{t-1} X_t)$ is the transition probability from a step $X_{t-1}$ to a step $X_t$, transferring adapted-user-model data from the at least one user-model server to the at least one application server, wherein the transfer is achieved by copying the adapted version of the user model from the user-model server to the application server as a whole or by copying a delta between the adapted user model and the non-adapted version of the user model to the application server, performing a user-verification process on the at least one application server on the basis of the transferred adapted user model data, the user verification process comprising

- comparing the user model with features extracted from user activities in a user session on the application server,
- determining a total risk-score value on the basis of the comparison,

wherein the total risk score value is determined by an adaptive risk-score engine on the application-server using the adapted-user-model data transferred from the user-model server, wherein determining the total risk-score value comprises determining feature-specific risk-score values based on a deviation between a plurality of feature values and the respective feature-specific user-behavior models, wherein calculating the feature-specific risk-score value associated with the time stamps of the user activities comprises evaluating a complement of the probability of the time stamp extracted from the actions of the user, the complement being taken from the Gaussian-mixture model, wherein if P(x) represents the probability of a time stamp of a user activity, the complement of the probability of the time stamp is given by 1 - P(x), wherein calculating the feature-specific risk-score value associated with the duration of user sessions comprises calculating the difference between the duration of a user session and at least one of (i) a moving average, (ii) a median of durations of user sessions, and/or comparing the duration of a user session with confidence intervals, given by multiples of a standard-deviation, wherein calculating the feature-specific risk-score value associated with the sequence of actions performed by the user comprises determining a complement of the Markov-probability of a given sequence of actions extracted from the actions of the user, wherein when $P(X_1, \dots X_n)$ is the total probability of n successive actions, the complement of this probability is given by 1 - $P(X_1, \dots X_n)$, wherein the adaptive risk-score engine being programmed to determine the feature-specific risk score values and to weight the risk score values according to their relative fraud probability and to combine the feature-specific risk-score values to obtain the total-risk-score value, wherein the total risk-score value is obtained using an ordered weighted average of the feature-specific risk-score values, wherein the feature-specific risk-score values are weighted by their ordering and an ordered weighted average of feature-specific risk-score values to obtain a total risk-score value is given by:

$$R(r_1 \dots r_N) = WB$$

, wherein R is the total-risk score value, $W = (w_1 \dots w_N)$ is a vector of weights $w_i$, and $B = (b_1 \dots b_N)$ is a vector of feature-specific risk-score values $b_i$, ordered according to their magnitude beginning with the greatest risk score val-

ue as element $b_1$, the weights $w_i$ of vector **W** being in sum one: $\sum_{i=1}^{N} w_i = 1$,

- in response to the total risk-score value exceeding a given threshold, performing a corrective action, wherein the corrective action comprises at least one of (i) signing out the user, (ii) requesting a two-factor authentication from the user, (iii) locking the user, and (iv) initiating an alert function.

2. The method of claim 1, wherein the corrective action is selected based on the total risk score value.

3. The method of claim 1 or 2, wherein the user-activity data comprises at least one user-activity log file.

4. The method of any one of claims 1 to 3, wherein the features are obtainable from at least two different applications, running on at least two different application servers.

5. The method of any one of claims 1 to 4, wherein, the corrective action is performed regardless of the risk-score value, in response to a certain feature pattern being detected.

6. The method of any one of claims 1 to 5, wherein the feature-specific user behavior models are also application specific.

7. The method of any one of claims 1 to 6, wherein the feature-specific risk-score values are combined using multi-criteria-decision analysis (MCDA).

8. The method of claim 7, wherein the adaptive risk-score engine is adapted on the user-model server by adapting the multi-criteria-decision analysis (MCDA).

9. The method of any one of claims 1 to 8, wherein user access to the application server is controlled by a logon-and-security server at a start of a user session and the total risk-score value is compared with the given threshold on the application server, wherein the corrective action is executed by an access control during the user session, wherein the access control is comprised by the application server.

10. A distributed server system, the distributed server system comprising at least one application server and at least one user-model server, the application and user-model servers comprising at least one processor and at least one non-volatile memory comprising at least one computer program with executable instructions stored therein for a method of monitoring user authenticity during user activities in a user session on the at least one application server, the method being carried out in a distributed manner by means of the distributed server system, the executable instructions, when executed by the at least one processor of the servers, cause the at least one processor to:

transfer user-activity data from the at least one application server to the at least one user-model server;
perform a user-modelling process on the at least one user model server in which an existing user model is adapted to user activities session-by-session, wherein the user model is adapted based on the user-activity data transferred from the at least one application server;
wherein the user model comprises a plurality of feature-specific user-behavior models, the feature-specific user-behavior models being sub-models of the user model associated with a feature indicative of user behavior,
wherein a feature-specific behavior-model associated with the time stamps of the actions of the user comprises a Gaussian-mixture model of time stamps of the user activity,
wherein the Gaussian mixture model is given by the following formula

$$P(x) = \sum_{i=1}^{N} a_i G_i(x, \mu_i, \sigma_i),$$

wherein $a_i$ is a weight of the $i$th Gaussian distribution $G_i(x, \mu_i, \sigma_i)$, $\mu_i$ is the expectation value of the $i$th Gaussian distribution and $\sigma_i$ is the standard-deviation of the $i_{th}$ Gaussian distribution and $P(x)$ is the probability of a certain timestamp x,
wherein a feature-specific behavior-model characterizing the duration of user sessions maps the duration of user sessions to at least one of (i) a moving average, (ii) a median, (iii) a standard-deviation of the user-session duration, (iv) a quantile of the duration of user sessions,
wherein a feature-specific behavior-model characterizing a sequence of actions performed by the user is a Markov-chain model,
wherein the Markov chain model models a random system with a plurality of states corresponding to actions taken by the user, wherein each state has an associated transition probability to another state,
wherein a total probability of a sequence of actions $X_1$ to $X_n$ performed by the user from a time 1 to a time n, each timestamp being associated with a certain user activity, is given by:

$$P(X_1, \ldots X_n) = P(X_1) \prod_{t=2}^{t=n} P(X_{t-1} X_t)$$

wherein $P(X_1, \ldots X_n)$ is the total probability of the n successive actions to be performed, $X_1$ to $X_n$, $P(X_1)$ is the probability that action $X_1$ is performed, and $P(X_{t-1} X_t)$ is the transition probability from a step $X_{t-1}$ to a step $X_t$,

transfer adapted user-model data from the at least one user-model server to the at least one application server, wherein the transfer is achieved by copying the adapted version of the user model from the user-model server to the application server as a whole or by copying a delta between the adapted user model and the non-adapted version of the user model to the application server,

perform a user-verification process on the at least one application server, comprising

- comparing the user model with features extracted from user activities in a user session on the application server
- determining a total risk-score value on the basis of the comparison,

wherein the total risk score value is determined by an adaptive risk-score engine on the application-server using the adapted-user-model data transferred from the user-model server,

wherein determining the total risk-score value comprises determining feature-specific risk-score values based on a deviation between a plurality of feature values and the respective feature-specific user-behavior models,

wherein calculating the feature-specific risk-score value associated with the time stamps of the user activities comprises evaluating a complement of the probability of the time stamp extracted from the actions of the user, the complement being taken from the Gaussian-mixture model, wherein if $P(x)$ represents the probability of a time stamp of a user activity, the complement of the probability of the time stamp is given by $1 - P(x)$,

wherein calculating the feature-specific risk-score value associated with the duration of user sessions comprises calculating the difference between the duration of a user session and at least one of (i) a moving average, (ii) a median of durations of user sessions, and/or comparing the duration of a user session with confidence intervals, given by multiples of a standard-deviation,

wherein calculating the feature-specific risk-score value associated with the sequence of actions performed by the user comprises determining a complement of the Markov-probability of a given sequence of actions extracted from the actions of the user, wherein when $P(X_1, \ldots X_n)$ is the total probability of n successive actions, the complement of this probability is given by $1 - P(X_1, \ldots X_n)$,

wherein the adaptive risk-score engine being programmed to determine the feature-specific risk score values and to weight the risk score values according to their relative fraud probability and to combine the feature-specific risk-score values to obtain the total-risk-score value,

wherein the total risk-score value is obtained using an ordered weighted average of the feature-specific risk-score values, wherein the feature-specific risk-score values are weighted by their ordering and an ordered weighted average of feature-specific risk-score values to obtain a total risk-score value is given by:

$$R(r_1 \ldots r_N) = WB$$

, wherein R is the total-risk score value, $W = (w_1 \ldots w_N)$ is a vector of weights $w_i$, and $B = (b_1 \ldots b_N)$ is a vector of feature-specific risk-score values $b_i$, ordered according to their magnitude beginning with the greatest risk score value as element $b_1$, the weights $w_i$ of vector $W$ being in sum one: $\sum_{i=1}^{N} w_i = 1$,

- in response to the total risk-score value exceeding a given threshold, performing a corrective action, wherein the corrective action comprises at least one of (i) signing out the user, (ii) requesting a two-factor authentication from the user, (iii) locking the user, and (iv) initiating an alert function.

11. The distributed server system of claim 10, wherein the executable instructions, when executed by the at least one processor, further cause the at least one processor to carry out the activities of any one of claims 2 to 9.

## Patentansprüche

1. Verfahren zum Überwachen einer Benutzerauthentizität während Benutzeraktivitäten in Benutzersitzungen auf wenigstens einem Anwendungsserver, wobei das Verfahren mittels eines verteilten Serversystems auf verteilte Weise ausgeführt wird und wobei das verteilte Serversystem den wenigstens einen Anwendungsserver und wenigstens einen Benutzermodellserver umfasst, wobei das Verfahren Folgendes umfasst:

Übertragen von Benutzeraktivitätsdaten von dem wenigstens einen Anwendungsserver zu dem wenigstens einen Benutzermodellserver;
Durchführen eines Benutzermodellierungsprozesses auf dem wenigstens einen Benutzermodellserver, auf dem ein vorhandenes Benutzermodell mit jeder Sitzung an Benutzeraktivitäten angepasst wird, wobei das Benutzermodell basierend auf den Benutzeraktivitätsdaten angepasst wird, die von dem wenigstens einen Anwendungsserver übertragen werden;
wobei das Benutzermodell mehrere kenngrößenspezifische Benutzerverhaltensmodelle umfasst und die kenngrößenspezifischen Benutzerverhaltensmodelle Untermodelle des Benutzermodells sind, die einer Kenngröße zugeordnet sind, die kennzeichnend für ein Benutzerverhalten ist,
wobei ein kenngrößenspezifisches Verhaltensmodell, das den Zeitstempeln der Aktionen des Benutzers zugeordnet ist, ein Gaussian-Mixture-Modell für die Zeitstempel der Benutzeraktivität ist, wobei das Gaussian-Mixture-Modell durch die folgende Formel gegeben ist:

$$P(x) = \sum_{i=1}^{N} a_i G_i(x, \mu_i, \sigma_i),$$

wobei $a_i$ ein Gewicht der i'ten Gaußverteilung $G_i(x, \mu_i, \sigma_i)$ ist, $\mu_i$ der Erwartungswert der i'ten Gaußverteilung ist und $\sigma_i$ die Standardabweichung der i'ten Gaußverteilung ist und P(x) die Wahrscheinlichkeit eines bestimmten Zeitstempels x ist,
wobei ein kenngrößenspezifisches Verhaltensmodell, das die Dauer von Benutzersitzungen beschreibt, die Dauer von Benutzersitzungen auf wenigstens eine der folgenden Größen abbildet: (i) einen gleitenden Mittelwert, (ii) einen Median, (iii) eine Standardabweichung der Dauer der Benutzersitzung, (iv) einem Quantil der Dauer der Benutzersitzung,

wobei ein kenngrößenspezifisches Verhaltensmodell, das eine Abfolge von vom Benutzer ausgeführten Aktionen beschreibt, ein Markov-Kettenmodell ist,
wobei das Markov-Kettenmodell ein Zufallssystem mit mehreren Zuständen modelliert, die vom Benutzer vorgenommenen Aktionen entsprechen, wobei jeder Zustand eine zugehörige Übergangswahrscheinlichkeit in einen anderen Zustand hat,
wobei eine Gesamtwahrscheinlichkeit einer Abfolge von Aktionen $X_1$ bis $X_n$, die vom Benutzer von einem Zeitpunkt 1 bis zu einem Zeitpunkt n ausgeführt werden, und wobei jeder Zeitstempel einer bestimmten Benutzeraktivität zugeordnet ist, durch Folgendes gegeben ist:

$$P(X_1, \dots X_n) = P(X_1) \prod_{t=2}^{t=n} P(X_{t-1} X_t)$$

wobei $P(X_1, \dots X_n)$ die Gesamtwahrscheinlichkeit ist, dass die n aufeinanderfolgenden Aktionen, $X_1$ bis $X_n$, ausgeführt werden, $P(X_1)$ die Wahrscheinlichkeit ist, dass Aktion $X_1$ ausgeführt wird, und $P(X_{t-1} X_t)$ die Übergangswahrscheinlichkeit von einem Schritt $X_{t-1}$ zu einem Schritt $X_t$ ist,
Übertragen von Daten angepasster Benutzermodelle von dem wenigstens einen Benutzermodellserver zu dem wenigstens einen Anwendungsserver, wobei die Übertragung durch das Kopieren der angepassten Version des Benutzermodells vom Benutzermodellserver zum Anwendungsserver als ein Ganzes oder durch das Kopieren eines Deltas zwischen dem angepassten Benutzermodell und der nichtangepassten Version des Benutzermodells zum Anwendungsserver erzielt wird,
Ausführen eines Prozesses zur Benutzerverifikation auf dem wenigstens einen Anwendungsserver auf Basis der übertragenen Daten angepasster Benutzermodelle, wobei der Prozess zur Benutzerverifikation Folgendes umfasst:

- Vergleichen des Benutzermodells mit Kenngrößen, die aus Benutzeraktivitäten in einer Benutzersitzung auf dem Anwendungsserver gewonnen wurden,
- Bestimmen eines Gesamt-Risiko-Bewertungswerts auf Basis des Vergleichs, wobei der Gesamt-Risiko-Bewertungswert durch eine adaptive Risiko-Bewertungseinheit auf dem Anwendungsserver bestimmt wird, unter Verwendung der Daten angepasster Benutzermodelle, die vom Benutzermodellserver übertragen werden,

wobei das Bestimmen des Gesamt-Risiko-Bewertungswerts das Bestimmen kenngrößenspezifischer Risiko-Bewertungswerte basierend auf einer Abweichung zwischen mehreren Kenngrößenwerten und den zugehörigen kenngrößenspezifischen Benutzerverhaltensmodellen umfasst,

wobei das Berechnen des kenngrößenspezifischen Risiko-Bewertungswerts, der den Zeitstempeln der Benutzeraktivitäten zugeordnet ist, das Auswerten eines Komplements der Wahrscheinlichkeit des aus den Aktionen des Benutzers gewonnenen Zeitstempels umfasst, wobei das Komplement aus dem Gaussian-Mixture-Modell entnommen ist, wobei, falls $P(x)$ die Wahrscheinlichkeit eines Zeitstempels einer Benutzeraktivität darstellt, das Komplement der Wahrscheinlichkeit des Zeitstempels durch $1 - P(x)$ gegeben ist,

wobei das Berechnen des kenngrößenspezifischen Risiko-Bewertungswerts, der der Zeitdauer von Benutzersitzungen zugeordnet ist, das Berechnen der Differenz zwischen der Zeitdauer einer Benutzersitzung und wenigstens einem von (i) einem gleitenden Mittelwert, (ii) einem Median von Zeitdauerwerten von Benutzersitzungen, und/oder das Vergleichen der Zeitdauer einer Benutzersitzung mit Vertrauensintervallen, die durch Vielfache einer Standardabweichung gegeben sind, umfasst,

wobei das Berechnen des kenngrößenspezifischen Risiko-Bewertungswerts, der der Abfolge von vom Benutzer ausgeführten Aktionen zugeordnet ist, das Bestimmen eines Komplements der Markov-Wahrscheinlichkeit einer gegebenen Abfolge von Aktionen umfasst, die aus den Aktionen des Benutzers entnommen sind, wobei, wenn $P(X_1, ...X_n)$ die Gesamtwahrscheinlichkeit n aufeinanderfolgender Aktionen ist, das Komplement dieser Wahrscheinlichkeit $1 - P(X_1, ...X_n)$ ist,

wobei die adaptive Risiko-Bewertungseinheit dafür programmiert ist die kenngrößenspezifischen Risiko-Bewertungswerte zu bestimmen und die Risiko-Bewertungswerte entsprechend ihrer relativen Betrugswahrscheinlichkeit zu gewichten und die kenngrößenspezifischen Risiko-Bewertungswerte zu kombinieren, um den Gesamt-Risiko-Bewertungswert zu erhalten,

wobei der Gesamt-Risiko-Bewertungswert unter Verwendung eines geordneten gewichteten Mittelwerts der kenngrößenspezifischen Risiko-Bewertungswerte erhalten wird, wobei die kenngrößenspezifischen Risiko-Bewertungswerte durch ihre Anordnung gewichtet werden und ein geordneter gewichteter Mittelwert der kenngrößenspezifischen Risiko-Bewertungswerte zum Erhalten eines Gesamt-Risiko-Bewertungswerts durch Folgendes gegeben ist:

$$R(r_1 \ldots r_N) = WB,$$

wobei R der Gesamt-Risiko-Bewertungswert ist, $W = (w_1 \ldots w_N)$ ein Vektor von Gewichten $w_i$ ist und $B = (b_1 \ldots b_N)$ ein Vektor von kenngrößenspezifischen Risiko-Bewertungswerten $b_i$ ist, die entsprechend ihrer Größe geordnet sind, beginnend mit dem größten Risiko-Bewertungswert als Element $b_1$, wobei die Gewichte $w_i$ des Vektors W die Summe Eins ergeben:

$$\sum_{i=1}^{N} w_i = 1,$$

- in Reaktion darauf, dass der Gesamt-Risiko-Bewertungswert einen gegebenen Schwellwert überschreitet, Ausführen einer korrigierenden Aktion, wobei die korrigierende Aktion wenigstens einen der folgenden Punkte umfasst: (i) Abmelden des Benutzers, (ii) Abfragen einer Zwei-Faktor-Authentifizierung vom Benutzer, (iii) Blockieren des Benutzers und (iv) Auslösen einer Alarmfunktion.

2. Verfahren nach Anspruch 1, wobei die korrigierende Aktion basierend auf dem Gesamt-Risiko-Bewertungswert ausgewählt wird.

3. Verfahren nach Anspruch 1 oder 2, wobei die Benutzeraktivitätsdaten wenigstens eine Benutzeraktivitätsprotokolldatei umfassen.

4. Verfahren nach einem der Ansprüche 1 bis 3, wobei die Kenngrößen von wenigstens zwei verschiedenen Anwendungen erhalten werden können, die auf wenigstens zwei verschiedenen Anwendungsservern ausgeführt werden.

**5.** Verfahren nach einem der Ansprüche 1 bis 4, wobei die korrigierende Aktion unabhängig vom Gesamt-Risiko-Bewertungswert ausgeführt wird, in Reaktion darauf, dass ein bestimmtes Kenngrößenmuster detektiert wird.

**6.** Verfahren nach einem der Ansprüche 1 bis 5, wobei die kenngrößenspezifischen Benutzerverhaltensmodelle auch anwendungsspezifisch sind.

**7.** Verfahren nach einem der Ansprüche 1 bis 6, wobei die kenngrößenspezifischen Risiko-Bewertungswerte unter Verwendung einer Multi Criteria Decision Analysis (MCDA) kombiniert werden.

**8.** Verfahren nach Anspruch 7, wobei die adaptive Risiko-Bewertungseinheit auf dem Benutzermodellserver angepasst wird, indem die Multi Criteria Decision Analysis (MCDA) angepasst wird.

**9.** Verfahren nach einem der Ansprüche 1 bis 8, wobei der Benutzerzugriff auf den Anwendungsserver bei einem Start einer Benutzersitzung durch einen Anmelde- und Sicherheitsserver kontrolliert wird und der Gesamt-Risiko-Bewertungswert mit dem gegebenen Schwellwert auf dem Anwendungsserver verglichen wird, wobei die korrigierende Aktion durch eine Zugriffskontrolle während der Benutzersitzung ausgeführt wird, wobei die Zugriffskontrolle sich auf dem Anmeldeserver befindet.

**10.** Verteiltes Serversystem, wobei das verteilte Serversystem wenigstens einen Anwendungsserver und wenigstens einen Benutzermodellserver umfasst, wobei die Anwendungs- und Benutzermodellserver Folgendes umfassen: wenigstens einen Prozessor und wenigstens einen nichtflüchtigen Speicher, der wenigstens ein Computerprogramm mit ausführbaren Anweisungen umfasst, die in ihm gespeichert sind, für ein Verfahren zum Überwachen einer Benutzerauthentizität während Benutzeraktivitäten in einer Benutzersitzung auf dem wenigstens einen Anwendungsserver, wobei das Verfahren auf verteilte Weise mittels des verteilten Serversystems ausgeführt wird, wobei die ausführbaren Anweisungen, wenn sie durch den wenigstens einen Prozessor der Server ausgeführt werden, den wenigstens einen Prozessor zu Folgendem veranlassen:

Übertragen von Benutzeraktivitätsdaten von dem wenigstens einen Anwendungsserver zu dem wenigstens einen Benutzermodellserver; Durchführen eines Benutzermodellierungsprozesses auf dem wenigstens einen Benutzermodellserver, auf dem ein vorhandenes Benutzermodell mit jeder Sitzung an Benutzeraktivitäten angepasst wird, wobei das Benutzermodell basierend auf den Benutzeraktivitätsdaten angepasst wird, die von dem wenigstens einen Anwendungsserver übertragen werden;
wobei das Benutzermodell mehrere kenngrößenspezifische Benutzerverhaltensmodelle umfasst und die kenngrößenspezifischen Benutzerverhaltensmodelle Untermodelle des Benutzermodells sind, die einer Kenngröße zugeordnet sind, die kennzeichnend für ein Benutzerverhalten ist,
wobei ein kenngrößenspezifisches Verhaltensmodell, das den Zeitstempeln der Aktionen des Benutzers zugeordnet ist, ein Gaussian-Mixture-Modell für die Zeitstempel der Benutzeraktivität umfasst,
wobei das Gaussian-Mixture-Modell durch die folgende Formel gegeben ist:

$$P(x) = \sum_{i=1}^{N} a_i G_i(x, \mu_i, \sigma_i),$$

wobei $a_i$ ein Gewicht der i'ten Gaußverteilung $G_i(x, \mu_i, \sigma_i)$ ist, $\mu_i$ der Erwartungswert der i'ten Gaußverteilung ist und $\sigma_i$ die Standardabweichung der i'ten Gaußverteilung ist und $P(x)$ die Wahrscheinlichkeit eines bestimmten Zeitstempels x ist,
wobei ein kenngrößenspezifisches Verhaltensmodell, das die Dauer von Benutzersitzungen beschreibt, die Dauer von Benutzersitzungen auf wenigstens eine der folgenden Größen abbildet: (i) einen gleitenden Mittelwert, (ii) einen Median, (iii) eine Standardabweichung der Dauer der Benutzersitzung, (iv) einem Quantil der Dauer der Benutzersitzung,
wobei ein kenngrößenspezifisches Verhaltensmodell, das eine Abfolge von vom Benutzer ausgeführten Aktionen beschreibt, ein Markov-Kettenmodell ist,
wobei das Markov-Kettenmodell ein Zufallssystem mit mehreren Zuständen modelliert, die vom Benutzer vorgenommenen Aktionen entsprechen, wobei jeder Zustand eine zugehörige Übergangswahrscheinlichkeit in einen anderen Zustand hat,
wobei eine Gesamtwahrscheinlichkeit einer Abfolge von Aktionen $X_1$ bis $X_n$, die vom Benutzer von einem Zeitpunkt 1 bis zu einem Zeitpunkt n ausgeführt werden, und wobei jeder Zeitstempel einer bestimmten Benutzeraktivität zugeordnet ist, durch Folgendes gegeben ist:

$$P(X_1, \dots X_n) = P(X_1) \prod_{t=2}^{t=n} P(X_{t-1}X_t)$$

wobei $P(X_1, \dots X_n)$ die Gesamtwahrscheinlich-

keit ist, dass die n aufeinanderfolgenden Aktionen, $X_1$ bis $X_n$, ausgeführt werden, $P(X_1)$ die Wahrscheinlichkeit ist, dass Aktion $X_1$ ausgeführt wird, und $P(X_{t-1}X_t)$ die Übergangswahrscheinlichkeit von einem Schritt $X_{t-1}$ zu einem Schritt $X_t$ ist,

Übertragen von Daten angepasster Benutzermodelle von dem wenigstens einen Benutzermodellserver zu dem wenigstens einen Anwendungsserver, wobei die Übertragung durch das Kopieren der angepassten Version des Benutzermodells vom Benutzermodellserver zum Anwendungsserver als ein Ganzes oder durch das Kopieren eines Deltas zwischen dem angepassten Benutzermodell und der nichtangepassten Version des Benutzermodells zum Anwendungsserver erzielt wird,

Ausführen eines Prozesses zur Benutzerverifikation auf dem wenigstens einen Anwendungsserver, der Folgendes umfasst:

- Vergleichen des Benutzermodells mit Kenngrößen, die aus Benutzeraktivitäten in einer Benutzersitzung auf dem Anwendungsserver gewonnen wurden,
- Bestimmen eines Gesamt-Risiko-Bewertungswerts auf Basis des Vergleichs,

wobei der Gesamt-Risiko-Bewertungswert durch eine adaptive Risiko-Bewertungseinheit auf dem Anwendungsserver bestimmt wird, unter Verwendung der Daten angepasster Benutzermodelle, die vom Benutzermodellserver übertragen werden,

wobei das Bestimmen des Gesamt-Risiko-Bewertungswerts das Bestimmen kenngrößenspezifischer Risiko-Bewertungswerte basierend auf einer Abweichung zwischen mehreren Kenngrößenwerten und den zugehörigen kenngrößenspezifischen Benutzerverhaltensmodellen umfasst,

wobei das Berechnen des kenngrößenspezifischen Risiko-Bewertungswerts, der den Zeitstempeln der Benutzeraktivitäten zugeordnet ist, das Auswerten eines Komplements der Wahrscheinlichkeit des aus den Aktionen des Benutzers gewonnenen Zeitstempels umfasst, wobei das Komplement aus dem Gaussian-Mixture-Modell entnommen ist, wobei, falls P(x) die Wahrscheinlichkeit eines Zeitstempels einer Benutzeraktivität darstellt, das Komplement der Wahrscheinlichkeit des Zeitstempels durch 1 - P(x) gegeben ist,

wobei das Berechnen des kenngrößenspezifischen Risiko-Bewertungswerts, der der Zeitdauer von Benutzersitzungen zugeordnet ist, das Berechnen der Differenz zwischen der Zeitdauer einer Benutzersitzung und wenigstens einem von (i) einem gleitenden Mittelwert, (ii) einem Median von Zeitdauerwerten von Benutzersitzungen, und/oder das Vergleichen der Zeitdauer einer Benutzersitzung mit Vertrauensintervallen, die durch Vielfache einer Standardabweichung gegeben sind, umfasst,

wobei das Berechnen des kenngrößenspezifischen Risiko-Bewertungswerts, der der Abfolge von vom Benutzer ausgeführten Aktionen zugeordnet ist, das Bestimmen eines Komplements der Markov-Wahrscheinlichkeit einer gegebenen Abfolge von Aktionen umfasst, die aus den Aktionen des Benutzers entnommen sind, wobei, wenn $P(X_1, ...X_n)$ die Gesamtwahrscheinlichkeit n aufeinanderfolgender Aktionen ist, das Komplement dieser Wahrscheinlichkeit $1 - P(X_1, ...X_n)$ ist,

wobei die adaptive Risiko-Bewertungseinheit dafür programmiert ist die kenngrößenspezifischen Risiko-Bewertungswerte zu bestimmen und die Risiko-Bewertungswerte entsprechend ihrer relativen Betrugswahrscheinlichkeit zu gewichten und die kenngrößenspezifischen Risiko-Bewertungswerte zu kombinieren, um den Gesamt-Risiko-Bewertungswert zu erhalten,

wobei der Gesamt-Risiko-Bewertungswert unter Verwendung eines geordneten gewichteten Mittelwerts der kenngrößenspezifischen Risiko-Bewertungswerte erhalten wird, wobei die kenngrößenspezifischen Risiko-Bewertungswerte durch ihre Anordnung gewichtet werden und ein geordneter gewichteter Mittelwert der kenngrößenspezifischen Risiko-Bewertungswerte zum Erhalten eines Gesamt-Risiko-Bewertungswerts durch Folgendes gegeben ist:

$$R(r_1 \ldots r_N) = \mathbf{WB},$$

wobei R der Gesamt-Risiko-Bewertungswert ist, $W = (w_1 \ldots w_N)$ ein Vektor von Gewichten $w_i$ ist und $B = (b_1 \ldots b_N)$

ein Vektor von kenngrößenspezifischen Risiko-Bewertungswerten $b_i$ ist, die entsprechend ihrer Größe geordnet sind, beginnend mit dem größten Risiko-Bewertungswert als Element $b_i$, wobei die Gewichte $W_i$ des Vektors W die Summe Eins ergeben:

$$\sum_{i=1}^{N} W_i = 1,$$

- in Reaktion darauf, dass der Gesamt-Risiko-Bewertungswert einen gegebenen Schwellwert überschreitet, Ausführen einer korrigierenden Aktion, wobei die korrigierende Aktion wenigstens einen der folgenden Punkte umfasst: (i) Abmelden des Benutzers, (ii) Abfragen einer Zwei-Faktor-Authentifizierung vom Benutzer, (iii) Blockieren des Benutzers und (iv) Auslösen einer Alarmfunktion.

**11.** Verteiltes Serversystem nach Anspruch 10, wobei die ausführbaren Anweisungen, wenn sie durch den wenigstens einen Prozessor ausgeführt werden, außerdem den wenigstens einen Prozessor dazu veranlassen, die Aktivitäten nach einem der Ansprüche 2 bis 9 auszuführen.

**Revendications**

**1.** Procédé de contrôle de l'authenticité d'un utilisateur pendant des activités d'utilisateur lors de sessions d'utilisateur sur au moins un serveur d'application(s), le procédé étant mis en œuvre d'une manière distribuée au moyen d'un système de serveur(s) distribué(s), le système de serveur(s) distribué(s) comprenant l'au moins un serveur d'application(s) et au moins un serveur de modèle(s) d'utilisateur, le procédé comprenant :

le transfert de données d'activité d'utilisateur depuis l'au moins un serveur d'application(s) jusqu'à l'au moins un serveur de modèle(s) d'utilisateur ;
la réalisation d'un processus de modélisation d'utilisateur sur l'au moins un serveur de modèle(s) d'utilisateur, processus selon lequel un modèle d'utilisateur existant est adapté vis-à-vis d'activités d'utilisateur session par session, dans lequel le modèle d'utilisateur est adapté sur la base des données d'activité d'utilisateur qui sont transférées depuis l'au moins un serveur d'application(s) ;
dans lequel le modèle d'utilisateur comprend une pluralité de modèles de comportement d'utilisateur spécifiques en termes de caractéristique(s), les modèles de comportement d'utilisateur spécifiques en termes de caractéristique(s) étant des sous-modèles du modèle d'utilisateur qui est associé à une caractéristique qui est indicative d'un comportement d'utilisateur ;
dans lequel un modèle de comportement spécifique en termes de caractéristique(s) qui est associé aux estampilles temporelles des actions de l'utilisateur est un modèle de mélange gaussien d'estampilles temporelles de l'activité d'utilisateur ;
dans lequel le modèle de mélange gaussien est donné par la formule qui suit :

$$P(x) = \sum_{i=1}^{N} \alpha_i G_i(x, \mu_i, \sigma_i),$$

dans laquelle $\alpha_i$ est un poids de la i-ème distribution gaussienne $G_i(x, \mu_i, \sigma_i)$, $\mu_i$ est la valeur attendue de la i-ème distribution gaussienne et $\sigma_i$ est l'écart type de la i-ème distribution gaussienne et $P(x)$ est la probabilité d'une certaine estampille temporelle x ;
dans lequel un modèle de comportement spécifique en termes de caractéristique(s) qui caractérise la durée de sessions d'utilisateur cartographie la durée de sessions d'utilisateur en relation avec au moins une valeur qui est prise parmi (i) une moyenne mobile, (ii) une médiane, (iii) un écart type de la durée de session(s) d'utilisateur et (iv) un quantile de la durée de sessions d'utilisateur ;
dans lequel un modèle de comportement spécifique en termes de caractéristique(s) qui caractérise une séquence d'actions qui sont réalisées par l'utilisateur est un modèle de chaîne de Markov ;
dans lequel le modèle de chaîne de Markov modélise un système aléatoire qui comporte une pluralité d'états qui correspondent aux actions qui sont prises par l'utilisateur, dans lequel chaque état dispose d'une probabilité de transition associée par rapport à un autre état ;
dans lequel une probabilité totale d'une séquence d'actions $X_1$ à $X_n$ qui sont réalisées par l'utilisateur depuis un temps 1 jusqu'à un temps n, chaque estampille temporelle étant associée à une certaine activité d'utilisateur, est donnée par la formule qui suit :

$$P(X_1, \dots X_n) = P(X_1) \prod_{t=2}^{t=n} P(X_{t-1} X_t)$$

dans laquelle $P(X_1, \dots, X_n)$ est la probabilité totale que les n actions successives soient réalisées, $X_1$ à Xn, $P(X_1)$ est la probabilité que l'ac-

tion $X_1$ soit réalisée et $P(X_{t-1}X_t)$ est la probabilité de transition depuis une étape $X_{t-1}$ jusqu'à une étape $X_t$ ;

le transfert des données de modèle d'utilisateur adapté depuis l'au moins un serveur de modèle(s) d'utilisateur jusqu'à l'au moins un serveur d'application(s), dans lequel le transfert est réalisé en copiant la version adaptée du modèle d'utilisateur depuis le serveur de modèle(s) d'utilisateur jusqu'au serveur d'application(s) dans sa globalité ou en copiant un delta entre le modèle d'utilisateur adapté et la version non adaptée du modèle d'utilisateur sur le serveur d'application(s) ;

la réalisation d'un processus de vérification d'utilisateur sur l'au moins un serveur d'application(s) sur la base des données de modèle d'utilisateur adapté transférées, le processus de vérification d'utilisateur comprenant :

- la comparaison du modèle d'utilisateur avec des caractéristiques qui sont extraites à partir d'activités d'utilisateur lors d'une session d'utilisateur sur le serveur d'application(s) ;
- la détermination d'une valeur de score de risque total sur la base de la comparaison ;

dans lequel la valeur de score de risque total est déterminée par un moteur de score de risque adaptatif sur le serveur d'application(s) en utilisant les données de modèle d'utilisateur adapté qui sont transférées depuis le serveur de modèle(s) d'utilisateur ;

dans lequel la détermination de la valeur de score de risque total comprend la détermination de valeurs de score de risque spécifique en termes de caractéristique(s) sur la base d'une déviation entre une pluralité de valeurs de caractéristique et les modèles de comportement d'utilisateur spécifiques en termes de caractéristique(s) respectifs ;

dans lequel le calcul de la valeur de score de risque spécifique en termes de caractéristique(s) qui est associée aux estampilles temporelles des activités d'utilisateur comprend l'évaluation d'un complément de la probabilité de l'estampille temporelle qui est extraite à partir des actions de l'utilisateur, le complément étant pris à partir du modèle de mélange gaussien, dans lequel, si $P(x)$ représente la probabilité d'une estampille temporelle d'une activité d'utilisateur, le complément de la probabilité de l'estampille temporelle est donné par $1 - P(x)$ ;

dans lequel le calcul de la valeur de score de risque spécifique en termes de caractéristique(s) qui est associée à la durée de sessions d'utilisateur comprend le calcul de la différence entre la durée d'une session d'utilisateur et au moins une valeur qui est prise parmi (i) une moyenne mobile et (ii) une médiane de durées de sessions d'utilisateur, et/ou la comparaison de la durée d'une session d'utilisateur avec des intervalles de confiance qui sont donnés par des multiples d'un écart type ;

dans lequel le calcul de la valeur de score de risque spécifique en termes de caractéristique(s) qui est associée à la séquence d'actions qui sont réalisées par l'utilisateur comprend la détermination d'un complément de la probabilité de Markov d'une séquence donnée d'actions qui sont extraites à partir des actions de l'utilisateur, dans lequel, lorsque $P(X_1, ..., X_n)$ est la probabilité totale de n actions successives, le complément de cette probabilité est donné par $1 - P(X_1, ..., X_n)$ ;

dans lequel le moteur de score de risque adaptatif est programmé pour déterminer les valeurs de score de risque spécifique en termes de caractéristique(s) et pour pondérer les valeurs de score de risque en fonction de leur probabilité de fraude relative et pour combiner les valeurs de score de risque spécifique en termes de caractéristique(s) pour obtenir la valeur de score de risque total ;

dans lequel la valeur de score de risque total est obtenue en utilisant une moyenne pondérée ordonnée des valeurs de score de risque spécifique en termes de caractéristique(s), dans lequel les valeurs de score de risque spécifique en termes de caractéristique(s) sont pondérées au moyen de leur ordre et d'une moyenne pondérée ordonnée de valeurs de score de risque spécifique en termes de caractéristique(s) afin d'obtenir une valeur de score de risque total qui est donnée par la formule qui suit :

$$R(r_1 \dots r_N) = WB$$

dans laquelle R est la valeur de score de risque total, $W = (w_1, ..., w_N)$ est un vecteur de poids $w_i$, et $B = (b_1, ..., b_N)$ est un vecteur de valeurs de score de risque spécifique en termes de caractéristique(s) bi, qui sont ordonnées en fonction de leur amplitude en commençant par la valeur de score de risque la plus grande en tant qu'élément $b_1$, la somme des poids $w_i$ du vecteur W étant égale à l'unité : $\sum_{i=1}^{N} w_i = 1$,

- en réponse au fait que la valeur de score de risque total excède un seuil donné, la réalisation d'une action de correction, dans lequel l'action de correction comprend au moins une action qui est prise parmi (i) la déconnexion de l'utilisateur, (ii) la demande en requête d'une authentification en deux volets à l'utilisateur, (iii) le blocage de l'utilisateur et (iv) l'initiation d'une fonction d'alerte.

2. Procédé selon la revendication 1, dans lequel l'action de correction est sélectionnée sur la base de la valeur de score de risque total.

3. Procédé selon la revendication 1 ou 2, dans lequel les données d'activité d'utilisateur comprennent au moins un fichier d'archivage des activités de l'utilisateur.

4. Procédé selon l'une quelconque des revendications 1 à 3, dans lequel les caractéristiques peuvent être obtenues à partir d'au moins deux applications différentes qui sont déroulées sur au moins deux serveurs d'application(s) différents.

5. Procédé selon l'une quelconque des revendications 1 à 4, dans lequel l'action de correction est réalisée indépendamment de la valeur de score de risque, en réponse à la détection d'un certain motif de caractéristique(s).

6. Procédé selon l'une quelconque des revendications 1 à 5, dans lequel les modèles de comportement d'utilisateur spécifiques en termes de caractéristique(s) sont également spécifiques en termes d'application(s).

7. Procédé selon l'une quelconque des revendications 1 à 6, dans lequel les valeurs de score de risque spécifique en termes de caractéristique(s) sont combinées en utilisant une analyse de décision à multiples critères (MCDA).

8. Procédé selon la revendication 7, dans lequel le moteur de score de risque adaptatif est adapté sur le serveur de modèle(s) d'utilisateur en adaptant l'analyse de décision à multiples critères (MCDA).

9. Procédé selon l'une quelconque des revendications 1 à 8, dans lequel un accès d'utilisateur au serveur d'application(s) est commandé par un serveur de connexion et de sécurité lors d'un début d'une session d'utilisateur, et la valeur de score de risque total est comparée au seuil donné sur le serveur d'application (s), dans lequel l'action de correction est exécutée au moyen d'une commande d'accès pendant la session d'utilisateur, dans lequel la commande d'accès est réalisée par le serveur d'application (s) .

10. Système de serveur(s) distribué(s), le système de serveur(s) distribué(s) comprenant au moins un serveur d'application(s) et au moins un serveur de modèle(s) d'utilisateur, les serveurs d'application(s) et de modèle(s) d'utilisateur comprenant au moins un processeur et au moins une mémoire non volatile qui comprend au moins un programme informatique au sein duquel des instructions pouvant être exécutées sont stockées pour un procédé de contrôle de l'authenticité d'un utilisateur pendant des activités d'utilisateur lors d'une session d'utilisateur sur l'au moins un serveur d'application(s), le procédé étant mis en œuvre d'une manière distribuée au moyen du système de serveur(s) distribué(s), les instructions pouvant être exécutées, lorsqu'elles sont exécutées par l'au moins un processeur des serveurs, ayant pour effet que l'au moins un processeur réalise les actions qui suivent :

le transfert de données d'activité d'utilisateur depuis l'au moins un serveur d'application(s) jusqu'à l'au moins un serveur de modèle(s) d'utilisateur ;

la réalisation d'un processus de modélisation d'utilisateur sur l'au moins un serveur de modèle(s) d'utilisateur, processus selon lequel un modèle d'utilisateur existant est adapté vis-à-vis d'activités d'utilisateur session par session, dans lequel le modèle d'utilisateur est adapté sur la base des données d'activité d'utilisateur qui sont transférées depuis l'au moins un serveur d'application(s) ;

dans lequel le modèle d'utilisateur comprend une pluralité de modèles de comportement d'utilisateur spécifiques en termes de caractéristique(s), les modèles de comportement d'utilisateur spécifiques en termes de caractéristique(s) étant des sous-modèles du modèle d'utilisateur qui est associé à une caractéristique qui est indicative d'un comportement d'utilisateur ;

dans lequel un modèle de comportement spécifique en termes de caractéristique(s) qui est associé aux estampilles temporelles des actions de l'utilisateur comprend un modèle de mélange gaussien d'estampilles temporelles de l'activité d'utilisateur ;

dans lequel le modèle de mélange gaussien est donné par la formule qui suit :

$$P(x) = \sum_{i=1}^{N} \alpha_i G_i(x, \mu_i, \sigma_i),$$

dans laquelle $\alpha_i$ est un poids de la i-ème distribution gaussienne $G_i(x, \mu_i, \sigma_i)$, $\mu_i$ est la valeur attendue de la i-ème distribution gaussienne et $\sigma_i$ est l'écart type de la i-ème distribution gaussienne et $P(x)$ est la probabilité d'une certaine estampille temporelle $x$ ;

dans lequel un modèle de comportement spécifique en termes de caractéristique(s) qui caractérise la durée de sessions d'utilisateur cartographie la durée de sessions d'utilisateur en relation avec au moins une valeur qui est prise parmi (i) une moyenne mobile, (ii) une médiane, (iii) un écart type de la durée de session(s) d'utilisateur et (iv) un quantile de la durée de sessions d'utilisateur ;

dans lequel un modèle de comportement spécifique en termes de caractéristique(s) qui caractérise une séquence d'actions qui sont réalisées par l'utilisateur est un modèle de chaîne de Markov ;

dans lequel le modèle de chaîne de Markov modélise un système aléatoire qui comporte une pluralité d'états qui correspondent aux actions qui sont prises par l'utilisateur, dans lequel chaque état dispose d'une probabilité de transition associée par rapport à un autre état ;

dans lequel une probabilité totale d'une séquence d'actions $X_1$ à $X_n$ qui sont réalisées par l'utilisateur depuis un temps 1 jusqu'à un temps n, chaque estampille temporelle étant associée à une certaine activité d'utilisateur, est donnée par la formule qui suit :

$$P(X_1, \ldots X_n) = P(X_1) \prod_{t=2}^{t=n} P(X_{t-1} X_t)$$

dans laquelle $P(X_1, \ldots, X_n)$ est la probabilité totale que les n actions successives soient réalisées, $X_1$ à $X_n$, $P(X_1)$ est la probabilité que l'action $X_1$ soit réalisée et $P(X_{t-1} X_t)$ est la probabilité de transition depuis une étape $X_{t-1}$ jusqu'à une étape $X_t$ ;

le transfert des données de modèle d'utilisateur adapté depuis l'au moins un serveur de modèle(s) d'utilisateur jusqu'à l'au moins un serveur d'application(s), dans lequel le transfert est réalisé en copiant la version adaptée du modèle d'utilisateur depuis le serveur de modèle(s) d'utilisateur jusqu'au serveur d'application(s) dans sa globalité ou en copiant un delta entre le modèle d'utilisateur adapté et la version non adaptée du modèle d'utilisateur sur le serveur d'application(s) ;

la réalisation d'un processus de vérification d'utilisateur sur l'au moins un serveur d'application(s), comprenant :

- la comparaison du modèle d'utilisateur avec des caractéristiques qui sont extraites à partir d'activités d'utilisateur lors d'une session d'utilisateur sur le serveur d'application(s) ;
- la détermination d'une valeur de score de risque total sur la base de la comparaison ;

dans lequel la valeur de score de risque total est déterminée par un moteur de score de risque adaptatif sur le serveur d'application(s) en utilisant les données de modèle d'utilisateur adapté qui sont transférées depuis le serveur de modèle(s) d'utilisateur ;

dans lequel la détermination de la valeur de score de risque total comprend la détermination de valeurs de score de risque spécifique en termes de caractéristique(s) sur la base d'une déviation entre une pluralité de valeurs de caractéristique et les modèles de comportement d'utilisateur spécifiques en termes de caractéristique(s) respectifs ;

dans lequel le calcul de la valeur de score de risque spécifique en termes de caractéristique(s) qui est associée aux estampilles temporelles des activités d'utilisateur comprend l'évaluation d'un complément de la probabilité de l'estampille temporelle qui est extraite à partir des actions de l'utilisateur, le complément étant pris à partir du modèle de mélange gaussien, dans lequel, si P(x) représente la probabilité d'une estampille temporelle d'une activité d'utilisateur, le complément de la probabilité de l'estampille temporelle est donné par 1 - P(x) ;

dans lequel le calcul de la valeur de score de risque spécifique en termes de caractéristique(s) qui est associée à la durée de sessions d'utilisateur comprend le calcul de la différence entre la durée d'une session d'utilisateur et au moins une valeur qui est prise parmi (i) une moyenne mobile et (ii) une médiane de durées de sessions d'utilisateur, et/ou la comparaison de la durée d'une session d'utilisateur avec des intervalles de confiance qui sont donnés par des multiples d'un écart type ;

dans lequel le calcul de la valeur de score de risque spécifique en termes de caractéristique(s) qui est associée à la séquence d'actions qui sont réalisées par l'utilisateur comprend la détermination d'un complément de la probabilité de Markov d'une séquence donnée d'actions qui sont extraites à partir des actions de l'utilisateur, dans lequel, lorsque $P(X_1, \ldots, X_n)$ est la probabilité totale de n actions successives, le complément de cette probabilité est donné par 1 - $P(X_1, \ldots, X_n)$ ;

dans lequel le moteur de score de risque adaptatif est programmé pour déterminer les valeurs de score de risque spécifique en termes de caractéristique(s) et pour pondérer les valeurs de score de risque en fonction de leur probabilité de fraude relative et pour combiner les valeurs de score de risque spécifique en termes de caractéristique(s) pour obtenir la valeur de score de risque total ;

dans lequel la valeur de score de risque total est obtenue en utilisant une moyenne pondérée ordonnée des valeurs de score de risque spécifique en termes de caractéristique(s), dans lequel les valeurs de score de risque spécifique en termes de caractéristique(s) sont pondérées au moyen de leur ordre et d'une moyenne pondérée ordonnée de valeurs de score de risque spécifique en termes de caractéristique(s) afin d'obtenir une valeur de score de risque total qui est donnée par la formule qui suit :

$$R(r_1 ... r_N) = WB$$

dans laquelle R est la valeur de score de risque total, $W = (w_1, ..., w_N)$ est un vecteur de poids $w_i$, et $B = (b_1, ..., b_N)$ est un vecteur de valeurs de score de risque spécifique en termes de caractéristique (s) bi, qui sont ordonnées en fonction de leur amplitude en commençant par la valeur de score de risque la plus grande en tant qu'élément $b_1$, la somme des poids wi du vecteur W étant égale à l'unité : $\sum_{i=1}^{N} w_i = 1$,

- en réponse au fait que la valeur de score de risque total excède un seuil donné, la réalisation d'une action de correction, dans lequel l'action de correction comprend au moins une action qui est prise parmi (i) la déconnexion de l'utilisateur, (ii) la demande en requête d'une authentification en deux volets à l'utilisateur, (iii) le blocage de l'utilisateur et (iv) l'initiation d'une fonction d'alerte.

11. Système de serveur(s) distribué(s) selon la revendication 10, dans lequel les instructions pouvant être exécutées, lorsqu'elles sont exécutées par l'au moins un processeur, ont en outre pour effet que l'au moins un processeur met en œuvre les activités selon l'une quelconque des revendications 2 à 9.

Fig. 1

EP 3 203 436 B1

EPO - Munich
50
19. Jan. 2017

Fig. 2

Fig. 3a

Fig. 3b

Fig. 3c

Activity **80**

Sequence of actions

a

OWA 1

User info **81**

Office ID, organization, country

Origins **85**

IP

c

d

OWA 2

WOWA

Client info **84**

OS, user-agent, browser

e

b

Time info **82**

Connection times

f

Duration **83**

Session duration

Fig. 4

Fig. 5

EP 3 203 436 B1

Fig. 6

Start

1 — 100
Log user
activities
(on application server)

Push data to
user-model server — 101

2 — 102
Extract features

Model behavior — 103

Adapt score engine — 104

105 — Copy user
model **25** to
application
server **1**

Copy risk-score
engine **21** to
application
server **1** — 106

1 —
Risk-score engine **21**
Compare user activity to
user model **25**
(on application server) — 107

108 — total risk-
score value **71** exceeds
threshold?

Yes    No

3 —
Execute corrective
action **72** — 109

Fig. 7

- Connection periods

- Frequent Activities
  (0.87) SearchUser →DisplayUser → CloseTab ...
  (0.52) DisplayApplication → ManageAppRole ...

- Origins
  Country: FR (100%)
  Source IP's: 172.16.252.183 (81%), ...

- Client Machine
  OS: Windows 7 (100%)
  Browser: IE9 (95%), FF3 (5%)
  UA: Mozilla/4.0 (compatible; MSIE 7.0 [...] (95%)

- Session Durations
  Avg:12 min
  Median: 8 min
  Upper quantile (75%): ... min

- Latest Anomalies
  2014-12-23 at 10:45:34 → 0.28 (low risk)
  2015-01-12 at 03:14:10 → 0.92 (high risk)

- User: J.Z.
  Office ID's:
  - NCE1A0995 (80%)
  - NCE1A0955 (20%)

  Organizations:
  - 1A (100%)

95

Fig. 8

EP 3 203 436 B1

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006118968 A2

- US 20130104203 A1

**Non-patent literature cited in the description**

- **VICTORIA HODGE.** A Survey of Outlier Detection Methodologies. *Artificial Intelligence Review,* 01 October 2004, vol. 22 (2), ISSN 0269-2821, 85-126